(19) **Europäisches Patentamt / European Patent Office / Office européen des brevets**

(11) **EP 2 630 548 B1**

(12) **FASCICULE DE BREVET EUROPEEN**

(45) Date de publication et mention de la délivrance du brevet:
**09.09.2020 Bulletin 2020/37**

(21) Numéro de dépôt: **11787733.2**

(22) Date de dépôt: **21.10.2011**

(51) Int Cl.:
***G05B 23/02*** *(2006.01)*

(86) Numéro de dépôt international:
**PCT/FR2011/052467**

(87) Numéro de publication internationale:
**WO 2012/052696 (26.04.2012 Gazette 2012/17)**

(54) **PROCÉDÉ ET DISPOSITIF DE SURVEILLANCE D'UNE BOUCLE D'ASSERVISSEMENT D'UN SYSTÈME D'ACTIONNEMENT DE GÉOMÉTRIES VARIABLES D'UN TURBORÉACTEUR**

VERFAHREN UND VORRICHTUNG ZUR ÜBERWACHUNG EINER RÜCKKOPPLUNGSSCHLEIFE MIT BETÄTIGUNGSSYSTEM MIT VARIABLER GEOMETRIE EINES TRIEBWERKS

METHOD AND DEVICE FOR MONITORING A FEEDBACK LOOP OF A VARIABLE-GEOMETRY ACTUATOR SYSTEM OF A JET ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2010 FR 1058681**

(43) Date de publication de la demande:
**28.08.2013 Bulletin 2013/35**

(73) Titulaire: **Safran Aircraft Engines**
**75015 Paris (FR)**

(72) Inventeurs:
- **MASSE, Jean-Rémi, André**
  **F-77550 Moissy-cramayel Cedex (FR)**
- **LAMOUREUX, Benjamin Pierre**
  **F-77550 Moissy-cramayel Cedex (FR)**
- **AUROUSSEAU, Christian**
  **F-77550 Moissy-cramayel Cedex (FR)**
- **DELDALLE, Régis, Michel, Paul**
  **F-77550 Moissy-cramayel Cedex (FR)**
- **FLANDROIS, Xavier**
  **F-77550 Moissy-cramayel Cedex (FR)**
- **SIF, Aziz**
  **F-77550 Moissy-cramayel Cedex (FR)**

(74) Mandataire: **Cabinet Beau de Loménie**
**158, rue de l'Université**
**75340 Paris Cedex 07 (FR)**

(56) Documents cités:
**FR-A1- 2 939 170     US-A1- 2008 243 291**

**Description**

Arrière-plan de l'invention

La présente invention se rapporte au domaine général de l'aéronautique.

Elle concerne plus particulièrement la surveillance d'une boucle d'asservissement d'un système d'actionnement de géométries variables d'un turboréacteur équipant un aéronef.

Par "géométries variables", on entend ici les dimensions, formes et/ou positions d'organes de moteur et/ou positions ou vitesses d'organes d'équipements autres que les organes rotatifs moteur, qui sont susceptibles d'être modifiées en fonction d'événements détectés ou de régimes du moteur. Des exemples de "géométries variables" sont des angles de calage d'aubes stators à calage variable de redresseurs de compresseur, des positions de vannes de décharge du compresseur, des jeux aux sommets d'aubes de turbine et des positions de doseur de carburant.

De façon traditionnelle, ces variations de dimensions, formes ou positions sont réalisées par des systèmes d'actionnement hydrauliques utilisant le carburant comme fluide d'actionnement. Ces systèmes d'actionnement sont contrôlés par le module de régulation électronique ECU (Electronic Control Unit) du dispositif de régulation pleine autorité de l'aéronef (ou FADEC pour « Full Authority Digital Engine Control »), de sorte à adapter les géométries variables au scénario du vol (ou de la mission) de l'aéronef. Le contrôle est assuré par l'intermédiaire de boucles d'asservissement.

Ainsi, on comprend bien que la surveillance des systèmes d'actionnement de géométries variables dans un turboréacteur est cruciale en termes de disponibilité et de rendement du turboréacteur.

Les dégradations de ces systèmes d'actionnement se traduisent notamment par des positions et/ou des dimensions des organes du turboréacteur non conformes aux commandes de l'ECU en régime établi, ou par une réponse lente de ces organes à ces commandes en régime transitoire. Ces dégradations sont des prémices de panne. Elles sont en général dans un premier temps compensées par les boucles d'asservissement des systèmes d'actionnement, ou sans conséquence notable autre qu'une reconfiguration des systèmes d'actionnement (par exemple, un changement de voie de commande active).

Toutefois au bout d'un certain laps de temps, lorsque ces dégradations persistent et s'aggravent, elles ne sont plus compensées et peuvent rendre le turboréacteur non performant ou inopérant. Un message de panne peut alors être émis par le système de régulation ECU.

On comprend bien dès lors que la détection de ces détériorations est trop tardive puisqu'elle n'est réalisée que lorsque le système d'actionnement est en panne.

Il existe donc un besoin de disposer d'un procédé de surveillance efficace des boucles d'asservissement des systèmes d'actionnement de géométries variables d'un turboréacteur, afin notamment de pouvoir délivrer un avis de maintenance de ces systèmes d'actionnement avant que le turboréacteur ne soit rendu inopérant ou non performant, tout en veillant à minimiser le nombre d'opérations de maintenance inutiles et intempestives.

Par exemple, le document FR 2 939 924 et le document FR 1058681 non publié à ce jour décrivent des techniques de détection de pannes dans un moteur d'aéronef, comprenant l'estimation d'une pluralité d'indicateurs.

Le document « Hydraulic Actuation Loop Degradation Diagnosis and Prognosis », dè E. Diez-Lledó, J. Aguilar-Martin, J-R. Massé, A. Sif et E. Griful, 1st CEAS European Air and Space Conference, 2007, s'intéresse à l'utilisation de techniques de diagnostic et de pronostic appliquées à la surveillance de boucle d'asservissement de systèmes d'actionnement d'aubes de stator à calage variable.

Le document FR 2 939 170 A1 décrit des techniques de détection d'anomalies dans un moteur d'aéronef selon un modèle de régression temporelle modélisant le comportement d'un moyen de contrôle. Le document US 2008/243291 A1 décrit des techniques de diagnostic des dégradations de performances dans une boucle de régulation d'une vanne.

Objet et résumé de l'invention

La présente invention est définie par l'objet des revendications indépendantes. Des modes de réalisation avantageux sont définis dans les revendications dépendantes.

La présente invention a pour but notamment de répondre à ce besoin en proposant un procédé de surveillance d'une boucle d'asservissement d'un système d'actionnement de géométries variables d'un turboréacteur équipant un aéronef, ce système d'actionnement comprenant une servovalve commandant un premier et un second vérins. Conformément à l'invention, le procédé de surveillance comporte :

- une étape d'estimation d'une pluralité de paramètres de surveillance à partir de données de fonctionnement de la boucle d'asservissement, ces paramètres de surveillance étant sélectionnés parmi au moins une des catégories de paramètres suivantes :

  ∘ une catégorie de paramètres représentatifs d'une position des vérins ;

◦ une catégorie de paramètres représentatifs d'une vitesse des vérins ;
◦ une catégorie de paramètres représentatifs de coefficients de modèles autorégressifs utilisés pour prévoir une position des vérins en fonction d'un courant de commande de la servovalve ; et
◦ une catégorie de paramètres représentatifs du courant de commande de la servovalve ou d'un courant intégral de la boucle d'asservissement ;

- une étape d'obtention d'une pluralité d'indicateurs à partir des paramètres de surveillance ;
- une étape de détermination d'au moins une signature à partir des valeurs d'au moins une partie des indicateurs ; et
- une étape de détection et de localisation d'une dégradation affectant la boucle d'asservissement en fonction de ladite au moins une signature déterminée.

Corrélativement, l'invention vise également un dispositif de surveillance d'une boucle d'asservissement d'un système d'actionnement de géométries variables d'un turboréacteur équipant un aéronef, ce système d'actionnement comprenant une servovalve commandant un premier et un second vérins. Conformément à l'invention, le dispositif de surveillance comporte :

- des moyens d'estimation d'une pluralité de paramètres de surveillance à partir de données de fonctionnement de la boucle d'asservissement, lesdits paramètres de surveillance étant sélectionnés parmi au moins une des catégories de paramètres suivantes :

  ◦ une catégorie de paramètres représentatifs d'une position des vérins ;
  ◦ une catégorie de paramètres représentatifs d'une vitesse des vérins ;
  ◦ une catégorie de paramètres représentatifs de coefficients de modèles autorégressifs utilisés pour prévoir une position des vérins en fonction d'un courant de commande de la servovalve ; et
  ◦ une catégorie de paramètres représentatifs du courant de commande de la servovalve ou d'un courant intégral de la boucle d'asservissement ;

- des moyens d'obtention d'une pluralité d'indicateurs à partir des paramètres de surveillance ;
- des moyens de détermination d'au moins une signature à partir des valeurs d'au moins une partie des indicateurs ; et
- des moyens de détection et de localisation d'une dégradation affectant la boucle d'asservissement en fonction de ladite au moins une signature déterminée.

L'invention propose ainsi un procédé et un dispositif de surveillance d'une boucle d'asservissement d'un système d'actionnement de géométries variables d'un turboréacteur fiables. Un tel système d'actionnement est par exemple un système d'actionnement de géométries variables choisies parmi :

- des angles de calage d'aubes de stator à calage variable de redresseurs de compresseur,
- un débit de carburant,
- des jeux aux sommets d'aube d'une turbine haute-pression ou basse-pression, et
- des positions de vanne de décharge d'un compresseur du turboréacteur.

On notera qu'au sens de l'invention, une dégradation affectant la boucle d'asservissement pourra désigner indifféremment tout type de défaut ou de détérioration affectant cette boucle d'asservissement. Il s'agit à proprement parler de prémices de panne, c'est-à-dire qu'une dégradation peut avoir pour conséquence, si elle persiste et s'aggrave, de rendre le turboréacteur inopérant ou non performant.
De façon avantageuse, l'invention permet non seulement la prévision de pannes susceptibles d'affecter la boucle d'asservissement mais également leur localisation (ex. au niveau de la commande de la boucle d'asservissement, de la chaine d'acquisition des commandes réellement appliquées, etc.), grâce notamment à l'utilisation de signatures (ou symptômes) représentatives du fonctionnement de la boucle d'asservissement sur une période de temps prédéterminée.
Un avis de maintenance préventif ciblé relatif au système d'actionnement peut alors éventuellement être généré, permettant d'une part d'anticiper une panne du turboréacteur et d'autre part d'intervenir de façon ciblée sur le système d'actionnement.
Ainsi, en améliorant la surveillance du système d'actionnement, l'invention permet d'éviter une maintenance surabondante et inutile du turboréacteur, tout en garantissant la disponibilité et le rendement de celui-ci. La disponibilité et le rendement du turboréacteur sont de ce fait améliorés tout en réduisant les coûts de maintenance et de carburant.
Dans un mode de réalisation de l'invention, au moins un des paramètres est estimé à partir d'un modèle autorégressif dépendant d'au moins une variable exogène choisie parmi :

- une pression d'air d'une chambre de combustion du turboréacteur ;
- un débit de carburant dosé dans au moins un injecteur de la chambre de combustion du turboréacteur ; et
- une vitesse de rotation d'un arbre haute pression du turboréacteur.

Le recours à un modèle autorégressif permet de mettre en œuvre une surveillance prédictive du système d'actionnement, c'est-à-dire non seulement de diagnostiquer les défaillances du système d'actionnement, mais également de prévoir leur évolution et leur progression au cours de la vie du turboréacteur. Cette caractéristique peut favoriser ainsi une maintenance éclairée du turboréacteur, en fonction de la gravité de la défaillance.

En outre, le ou les modèles autorégressifs d'estimation des paramètres peuvent être corrigés en fonction des conditions environnementales du turboréacteur. Il n'est donc pas nécessaire, pour pouvoir bénéficier des avantages du procédé selon l'invention, de se placer à iso-conditions en termes de pression d'air dans la chambre de combustion du turboréacteur, de débit du carburant dosé dans le ou les injecteurs de la chambre de combustion et/ou de vitesse de rotation de l'arbre haute pression du turboréacteur.

Au contraire, l'invention permet avantageusement d'adapter la dynamique du ou des modèles autorégressifs considéré(s), en fonction par exemple :

- du débit de carburant fourni par la pompe à carburant, qui est fonction de la vitesse de rotation de l'arbre haute pression du turboréacteur ;
- de la résistance de l'air sur la cinématique, fonction de la pression d'air dans la chambre de combustion du turboréacteur ; et/ou
- du débit disponible pour le système d'actionnement, fonction du débit de carburant dosé dans les injecteurs de la chambre de combustion du turboréacteur.

De cette sorte, les modèles autorégressifs utilisés pour estimer les paramètres sont plus précis et il est possible d'éviter les fausses alertes dues à une évolution des coefficients du ou des modèles autorégressifs du fait d'un changement de ces conditions environnementales.

La catégorie de paramètres représentatifs d'une position des vérins peut comprendre, par exemple, au moins l'un des paramètres suivants :

- un paramètre représentatif d'une position instantanée mesurée du premier vérin ;
- un paramètre représentatif d'une position instantanée mesurée du deuxième vérin ;
- un paramètre représentatif d'une prévision de la position du premier vérin ;
- un paramètre représentatif d'une prévision de la position du deuxième vérin ; et
- un paramètre représentatif de la prévision d'une position globale de vérin.

La pluralité d'indicateurs comprend :

- un indicateur i_EVS représentant l'écart quadratique moyen normalisé entre le paramètre représentatif de la prévision d'une position globale de vérin et une position globale instantanée des vérins ;
- un indicateur i_EVA représentant l'écart quadratique moyen normalisé entre le paramètre représentatif d'une position instantanée mesurée du premier vérin et le paramètre représentatif de la prévision d'une position du premier vérin ;
- un indicateur i_EVB représentant l'écart quadratique moyen normalisé entre le paramètre représentatif d'une position instantanée mesurée du second vérin et le paramètre représentatif de la prévision d'une position du deuxième vérin ;
- un indicateur i_CID déterminé en fonction d'un paramètre représentatif du courant de commande moyen de la servovalve, normalisé par un paramètre représentatif d'un courant de commande de référence ; et
- un indicateur i_CINT déterminé en fonction d'un paramètre représentatif du courant intégral moyen de la boucle d'asservissement, normalisé par un paramètre représentatif d'un courant intégral de référence.

Ces indicateurs contribuent à une surveillance fiable et permettent de réduire considérablement les fausses alertes en ce qui concerne la détection des dégradations de type « mécaniques » du système d'actionnement et la prévision des pannes.

Par « dégradation de type mécanique du système d'actionnement » on entend au sens de l'invention qu'un élément mécanique du système d'actionnement est dégradé (ex. usure d'une pièce mécanique telle que le moteur couple).

En particulier, les indicateurs précités permettent de détecter de manière fiable des dégradations mécaniques du système d'actionnement telles que par exemple un décalage du courant de commande d'un des vérins, une obturation du diaphragme de refroidissement d'un des vérins, une usure interne du corps d'un des vérins pouvant induire une augmentation du débit de fuite interne de celui-ci.

Selon un mode de réalisation, la position du premier vérin, respectivement du deuxième vérin, est mesurée par un capteur de position comprenant des enroulements secondaires, les tensions efficaces des enroulements secondaires dépendant de la position du vérin, et la pluralité d'indicateurs comprend :

- un indicateur i_EPA représentatif d'un écart de prédiction de la position du premier vérin ;
- un indicateur i_EPB représentatif d'un écart de prédiction de la position du second vérin ;
- un indicateur i_SOMA déterminé en fonction d'un paramètre représentant une valeur moyenne de la somme des tensions efficaces des enroulements secondaires du capteur de position du premier vérin, normalisé par un paramètre représentatif d'une position moyenne de référence du premier vérin ;
- un indicateur i_SOMB déterminé en fonction d'un paramètre représentant une valeur moyenne de la somme des tensions efficaces des enroulements secondaires du capteur de position du second vérin, normalisé par un paramètre représentatif d'une position moyenne de référence du second vérin ;
- un indicateur i_EWRAP représentatif de l'écart moyen existant entre le courant de commande de la servovalve et un courant de commande retour mesuré.

Ces indicateurs contribuent à une surveillance fiable. Ils permettent de réduire considérablement les fausses alertes en ce qui concerne la détection des dégradations de type « électriques» du système d'actionnement, telles que par exemple des contacts intermittents sur les chaines de commande ou de mesure des vérins, ainsi que la prévision des pannes.

En outre ces indicateurs favorisent l'identification et la localisation des composants dégradés dans la boucle d'asservissement : vérin, servovalve, unité hydromécanique (HMU, Hydro Mechanical Unit) contenant la servovalve, câbles électriques (aussi connus sous le nom de harnais) transmettant les courants de commande ou d'indication de position, etc.

On notera que par paramètre de surveillance représentatif d'une vitesse de vérin du système d'actionnement, on entend tout type de paramètre équivalent à une vitesse de vérin. Ainsi il peut s'agir de la vitesse d'un vérin particulier du système d'actionnement, ou lorsque le système d'actionnement comporte plusieurs vérins, d'une vitesse dérivée de la position globale estimée à partir des voies valides du système d'actionnement.

Les inventeurs ont en effet constaté que de façon très avantageuse, l'étude de ces paramètres de surveillance et des indicateurs en résultant permet non seulement de détecter des dégradations mécaniques affectant la boucle d'asservissement, mais également de discriminer les dégradations les unes par rapport aux autres, c'est-à-dire d'identifier sur quels éléments elles portent autrement dit de les localiser (servovalve ou vérin(s), et le cas échéant sur quel(s) vérin(s)). L'invention est donc particulièrement remarquable en ce qu'elle propose une surveillance fiable de la boucle d'asservissement du système d'actionnement basée sur des capteurs déjà présents dans l'aéronef.

De tels indicateurs présentent l'avantage d'être peu sensibles aux conditions environnementales dans lesquelles les données de fonctionnement sont mesurées. Il n'est donc pas nécessaire avec ces indicateurs, pour pouvoir bénéficier des avantages du procédé selon l'invention, de se placer à iso-conditions en termes notamment de pression d'air dans la chambre de combustion du turboréacteur, de débit du carburant dosé dans le ou les injecteurs de la chambre de combustion et/ou de vitesse de rotation de l'arbre haute pression du turboréacteur, ou de normaliser ces indicateurs par rapport à ces conditions environnementales.

En outre, la surveillance proposée par l'invention sur la base de ces indicateurs est avantageusement robuste aux efforts extérieurs appliqués sur l'un et/ou l'autre des vérins (ex. charge radiale ou axiale appliquée sur la tige d'un ou des vérins).

On peut également envisager, dans d'autres modes de réalisation, que le procédé et le dispositif de surveillance selon l'invention présentent en combinaison tout ou partie des caractéristiques précitées.

Dans un mode particulier de réalisation, les différentes étapes du procédé de surveillance sont déterminées par des instructions de programmes d'ordinateurs.

En conséquence, l'invention vise aussi un programme d'ordinateur sur un support d'informations, ce programme étant susceptible d'être mis en œuvre dans un dispositif de surveillance ou plus généralement dans un ordinateur, ce programme comportant des instructions adaptées à la mise en œuvre des étapes d'un procédé de surveillance tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente un dispositif de surveillance d'une boucle d'asservissement d'un système d'actionnement de géométries variables conforme à l'invention, dans un mode particulier de réalisation de l'invention ;
- la figure 2 représente schématiquement l'architecture matérielle du dispositif de surveillance de la figure 1, dans un mode particulier de réalisation de l'invention ;
- la figure 3 représente, sous forme d'organigramme, les principales étapes d'un procédé de surveillance conforme à l'invention, lorsque celui-ci est mis en œuvre par le dispositif de surveillance de la figure 1 conformément à un premier mode de réalisation de l'invention ;
- la figure 4 représente, sous forme d'organigramme, les principales étapes d'un procédé de surveillance, lorsque celui-ci est mis en œuvre par le dispositif de surveillance de la figure 1 conformément à un second mode de réalisation (non revendiqué) ;
- la figure 5 illustre un exemple de courbe C modélisant les variations d'une vitesse de vérin en fonction du courant de commande de la servovalve pour une mission de l'aéronef, dans le second mode de réalisation ;
- les figures 6A et 6B illustrent quelques indicateurs pouvant être extraits de la courbe C de la figure 5, dans deux variantes particulières de réalisation ;
- la figure 7 illustre le comportement de la courbe C de la figure 5 en présence d'une dérive du courant de repos de la servovalve ; et
- la figure 8 illustre le comportement de la courbe C de la figure 5 en présence d'une fuite interne de vérin du système d'actionnement.

Description détaillée de l'invention

Comme décrit précédemment, l'invention concerne la surveillance de boucles d'asservissement de systèmes d'actionnement de géométries variables d'un turboréacteur équipant un aéronef.

Dans les exemples décrits ici, on envisage la surveillance d'une boucle d'asservissement d'un système d'actionnement pilotant la variation des angles de calage d'aubes de stator d'un turboréacteur, aussi connu sous le nom de VSV (Variable Stator Vane).

Toutefois, cette hypothèse n'est en aucun cas limitative. L'invention s'applique également à d'autres systèmes d'actionnement de géométries variables, comme décrit ultérieurement.

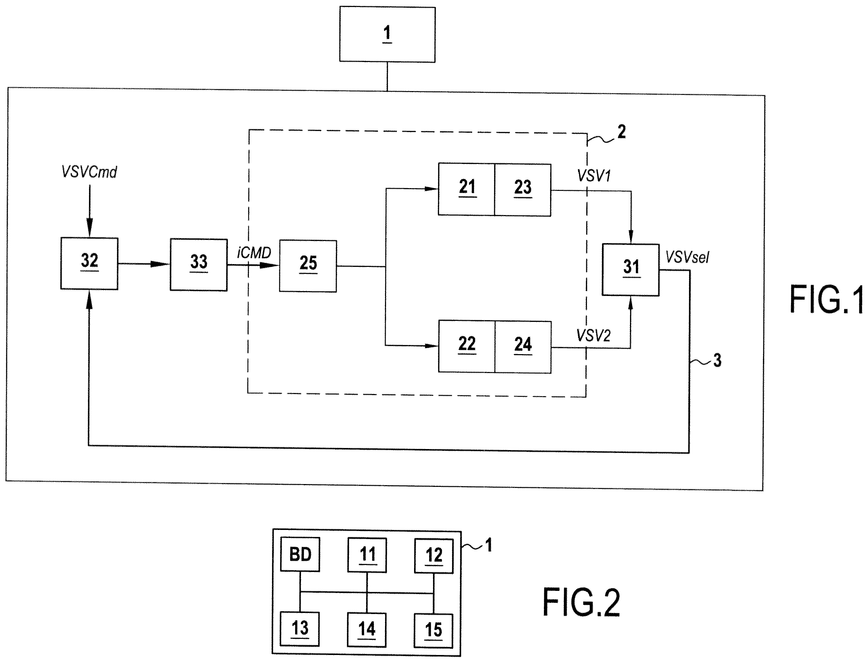

La **figure 1** représente, dans son environnement, un dispositif 1 de surveillance conforme à l'invention, dans un mode particulier de réalisation. Le dispositif de surveillance 1 est adapté ici à surveiller un système 2 d'actionnement de VSV d'un turboréacteur équipant un aéronef (non représentés), le système d'actionnement 2 étant commandé par une boucle d'asservissement 3 ou boucle de contrôle. Un tel système d'actionnement de VSV et une telle boucle d'asservissement sont connus en soi et ne seront décrits que brièvement ici.

Dans l'exemple envisagé ici, le système d'actionnement 2 comprend deux vérins redondants 21 et 22, solidaires mécaniquement.

Chaque vérin est associé à un capteur de position (respectivement 23 et 24), tel que par exemple un capteur LVDT (Linear Variable Displacement Transducer) placé dans le vérin. De façon connue, un tel capteur LVDT est constitué :

- d'un enroulement primaire, alimenté par un courant alternatif ;
- d'un curseur magnétique ; et
- de deux enroulements secondaires, notés EA et EB.

On notera que la position du curseur magnétique influe sur les tensions efficaces aux bornes des enroulements secondaires, notées $Vi\_EA$ et $Vi\_EB$, i=23, 24 selon le capteur considéré. La position est proportionnelle à la quantité :

$$\frac{Vi\_EA - Vi\_EB}{Vi\_EA + Vi\_EB}.$$

Les positions des vérins 21 et 22 sont commandées par une servovalve 25, elle-même contrôlée par la boucle d'asservissement 3. Plus précisément, la servovalve 25 adapte la puissance hydraulique délivrée aux vérins 21 et 22 en fonction d'un courant électrique de commande iCMD qu'elle reçoit de la boucle d'asservissement 3.

Les positions des vérins 21 et 22 mesurées respectivement par les capteurs 23 et 24 et notées VSV1 et VSV2, sont fournies à une unité de sélection 31 de la boucle d'asservissement 3.

L'unité de sélection 31 est adaptée à estimer une position globale instantanée VSVsel, qu'elle évalue à partir des positions VSV1 et VSV2.

Par exemple, la validité des positions VSV1 et VSV2 est déterminée et VSVsel est égale à la moyenne des positions mesurées VSV1 et VSV2 si elles sont toutes les deux valides, ou à l'une ou l'autre des positions mesurées VSV1 et VSV2 si une seule des positions est valide. Plus précisément, VSVsel = VSV1 si VSV1 est valide et VSV2 est invalide, et VSVsel = VSV2 si VSV2 est valide et VSV1 est invalide.

La boucle d'asservissement 3 comprend en outre, de façon connue, une unité de contrôle 32. Cette unité de contrôle 32 est adaptée à comparer la position globale instantanée VSVsel délivrée par l'unité de sélection 31, avec une position dite de commande VSVCmd représentative d'une position dans laquelle devraient se trouver les vérins conformément aux lois de régulation du turboréacteur mises en œuvre par l'ECU via la boucle d'asservissement 3 (VSVCmd est une position de vérin prise en compte pour déterminer une commande de la boucle d'asservissement 3 au sens de l'invention).

Un signal numérique illustrant l'écart de position entre VSVsel et VSVCmd est ensuite transmis par l'unité de contrôle 32 à une unité de régulation 33 de la boucle d'asservissement 3, de type correcteur proportionnel intégral. De façon connue, l'unité de régulation 33 est adaptée à transformer le signal numérique de comparaison reçu, en courant électrique de commande iCMD et à transmettre ce courant à la servovalve 25.

La servovalve 25 commande alors la position des vérins 21 et 22 en transformant le courant électrique de commande en puissance hydraulique, comme décrit précédemment.

Dans l'exemple envisagé ici, le dispositif de surveillance 1 est intégré dans le calculateur ECU du dispositif de régulation pleine autorité de l'aéronef (FADEC), et la boucle d'asservissement 3 qui comprend des unités 31, 32 et 33 est réalisée par un programme d'ordinateur exécuté par le dispositif de surveillance 1. Les unités 31, 32 et 33 représentées sur la figure 1 désignent donc des entités fonctionnelles, même si elles sont représentées en parallèle à des éléments structurels du système d'actionnement 2.

Dans une variante de réalisation, le dispositif de surveillance 1 est embarqué à bord de l'aéronef, dans un concentrateur de données, qui prend en charge les algorithmes de maintenance de l'aéronef.

Dans une autre variante de réalisation, le dispositif de surveillance 1 est embarqué dans un système au sol.

Le dispositif de surveillance 1 a ici l'architecture matérielle d'un ordinateur, comme représenté sur la **figure 2.**

Il comporte notamment un processeur 11, une mémoire vive 12, une mémoire morte 13, et des moyens 14 pour communiquer avec des équipements embarqués dans l'aéronef, tels que par exemple avec le dispositif de régulation pleine autorité de l'aéronef ou avec les composants du système d'actionnement 2 et de la boucle d'asservissement 3. De façon connue, ces équipements et le dispositif de surveillance 1 selon l'invention communiquent entre eux par l'intermédiaire de lignes ou de bus de données numériques équipant l'aéronef, connus de l'homme du métier.

Le dispositif de surveillance 1 comprend en outre des moyens de communication 15 avec un serveur de l'exploitant de l'aéronef (non représenté). Ces moyens comportent par exemple une carte réseau pour communiquer sur le réseau Internet.

La mémoire morte 13 comprend un programme informatique, conforme à l'invention, adapté à exécuter les principales étapes du procédé de surveillance selon l'invention décrites maintenant en référence à deux modes particuliers de réalisation de l'invention.

*Premier mode particulier de réalisation :*

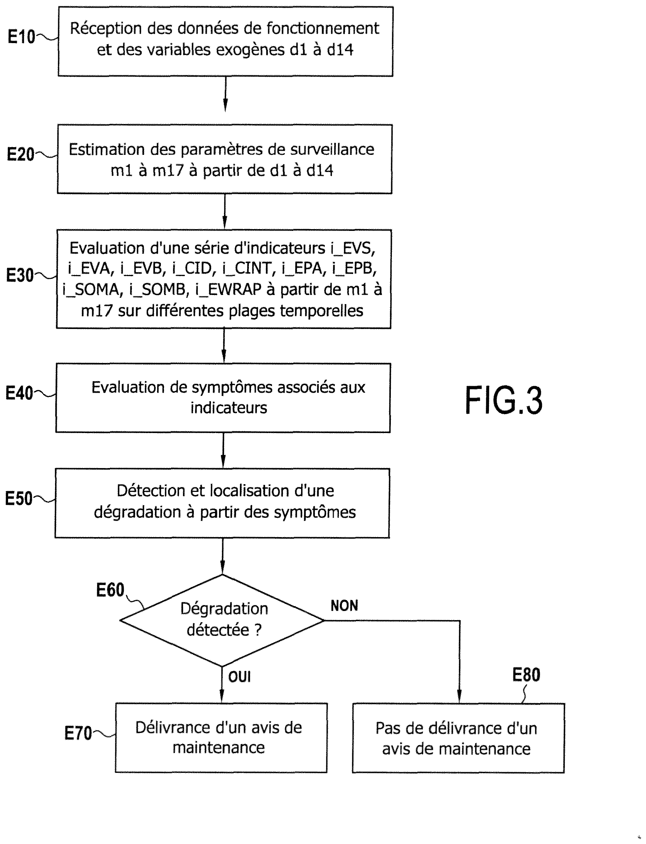

La **figure 3** illustre les principales étapes du procédé de surveillance selon l'invention lorsqu'il est mis en œuvre par le dispositif de la figure 1 conformément à un premier mode de réalisation de l'invention.

Selon ce premier mode de réalisation, le procédé de surveillance comporte :

- une étape d'estimation d'une pluralité de paramètres de surveillance à partir de données de fonctionnement de la boucle d'asservissement ;
- une étape d'évaluation d'une pluralité d'indicateurs à partir des paramètres de surveillance ;
- une étape d'évaluation d'au moins une matrice de signature, chaque matrice de signature étant représentative des valeurs d'au moins une partie des indicateurs ; et

- une étape de détection et de localisation d'une dégradation affectant la boucle d'asservissement en fonction de ladite au moins une matrice de signature.

En outre, on estime, au cours de l'étape d'estimation, une pluralité de paramètres sélectionnés parmi au moins une des catégories suivantes :

- une catégorie de paramètres représentatifs d'une position des vérins ;
- une catégorie de paramètres représentatifs de coefficients de modèles autorégressifs utilisés pour prévoir une position des vérins en fonction d'un courant de commande de la servovalve ; et
- une catégorie de paramètres représentatifs du courant de commande de la servovalve ou d'un courant intégral de la boucle d'asservissement.

Conformément à l'invention selon ce premier mode de réalisation, la surveillance de la boucle d'asservissement 3 du système d'actionnement 2 de VSV est mise en œuvre à travers différents ensembles de données, parmi lesquels des données de fonctionnement de la boucle d'asservissement, des paramètres de surveillance, des indicateurs, et des signatures (ou symptômes). Nous allons maintenant, en référence à la figure 3, décrire ces ensembles de données et la manière dont ils sont utilisés les uns par rapport aux autres pour la surveillance de la boucle d'asservissement 3.

Par données de fonctionnement de la boucle d'asservissement, on entend diverses données nécessaires au fonctionnement du système d'actionnement de VSV et plus particulièrement de la boucle d'asservissement, et/ou représentatives de son fonctionnement.

Dans l'exemple envisagé ici, on considère les données de fonctionnement suivantes :

- courant de commande de la voie active iCMD délivré à la servovalve 25 par l'unité de régulation 33 (ci-après noté d4) ;
- position VSV1 mesurée du premier vérin 21 (ci-après notée d5) ;
- position VSV2 mesurée du second vérin 22 (ci-après notée d6) ;
- position globale instantanée VSVsel des vérins, délivrée par l'unité de sélection 31 (ci-après notée d7) ;
- écart $\varepsilon$ entre la position de commande VSVCmd et la position globale VSVsel (ci-après noté d8) ;
- somme des tensions efficaces (V23_EA et V23_EB) des enroulements secondaires du capteur LVDT 23 du premier vérin (ci-après notée d9) ;
- somme des tensions efficaces (V24_EA et V24_EB) des enroulements secondaires du capteur LVDT 24 du second vérin (ci-après notée d10) ;
- courant de retour (ou « warp ») réellement mesuré pour la voie A de l'ECU (ci-après noté d11) ;
- courant de retour (ou « warp ») réellement mesuré pour la voie B de l'ECU (ci-après noté d12) ;
- indice de voie active IVA (ci-après noté d13) ;
- courant intégral de la boucle d'asservissement (ci-après noté d14), calculé par l'unité de régulation 33. On notera que le courant intégral permet de corriger les imperfections de la boucle d'asservissement 3. Le recours à un tel courant dans une boucle d'asservissement, en complément du courant proportionnel, est connu de l'homme du métier et ne sera pas décrit davantage ici.

Ces données de fonctionnement sont disponibles au niveau du FADEC, dans lequel est intégré le dispositif de surveillance 1, comme mentionné précédemment. Elles peuvent être issues de mesures réalisées à l'aide de capteurs équipant le turboréacteur et connus en soi, comme par exemple pour les données d5 et d6, ou accessibles via le module de régulation électronique du système de régulation moteur ECU, comme par exemple pour d7, d13 ou d14.

Dans l'exemple décrit ici, on considère en outre des variables dites exogènes, choisies parmi :

- la pression d'air PS3 de la chambre de combustion du turboréacteur (ci-après notée d3) ;
- le débit de carburant WFM dosé dans au moins un injecteur de la chambre de combustion du turboréacteur (ci-après noté d2) ; et
- la vitesse de rotation N2 de l'arbre haute pression du turboréacteur (ci-après notée d1).

Ces variables ne sont pas inhérentes au système d'actionnement et à sa boucle d'asservissement à proprement parler, d'où leur qualification d'exogènes, mais elles influent sur leurs comportements. Par exemple, la vitesse de rotation de la pompe du carburant qui sert de fluide hydraulique pour l'actionnement des vérins, est proportionnelle à la vitesse de rotation N2 de l'arbre haute pression du turboréacteur. De même, le débit de carburant WFM dosé dans les injecteurs de la chambre de combustion du turboréacteur influe sur le débit disponible pour le système d'actionnement hydraulique. Enfin, la pression d'air PS3 de la chambre de combustion du turboréacteur influe sur la contrainte appliquée au système par la cinématique actionnée par les vérins.

Ces variables exogènes sont connues de l'homme du métier et sont classiquement mesurées dans le turboréacteur via des capteurs appropriés (ex. débitmètre pour WFM). Comme pour les données de fonctionnement, les mesures de ces variables exogènes sont disponibles au niveau du FADEC.

Les données de fonctionnement précitées ainsi que les mesures des variables exogènes sont transmises par le FADEC au dispositif de surveillance 1, pour l'estimation de paramètres de surveillance de la boucle d'asservissement 3 (étape E10).

On notera que ces données peuvent être transmises au dispositif de surveillance au fur et à mesure de leur acquisition ou en variante, après une période de temps prédéterminée (par exemple, à l'arrêt du turboréacteur, ou périodiquement durant son fonctionnement).

Dans le premier mode de réalisation décrit ici, on envisage la surveillance de la boucle d'asservissement 3 au travers d'une pluralité de paramètres sélectionnés dans au moins l'une des catégories de paramètres suivantes :

- une catégorie CAT1 de paramètres représentatifs d'une position des vérins 21 et 22 ;
- une catégorie CAT2 de paramètres représentatifs de coefficients de modèles autorégressifs utilisés pour prévoir une position des vérins en fonction du courant de commande iCMD de la servovalve 25 ; et
- une catégorie CAT3 de paramètres représentatifs du courant de commande de la servovalve iCMD ou du courant intégral de la boucle d'asservissement 3.

Plus précisément, dans l'exemple décrit ici, on estime l'ensemble des paramètres suivants, sur une ou plusieurs (K) plages de temps prédéterminées notées TP1, TP2,...,TPK (étape E20) :

- dans la catégorie CAT1 :

→ un paramètre noté m1, représentatif de la position VSV1 instantanée mesurée du vérin 21 (premier vérin au sens de l'invention), sur la plage de temps TPk considérée (k=1,..,K). Ce paramètre est obtenu directement à partir des données d5. Autrement dit les composantes du vecteur m1 sont égales aux données d5 sur la plage de temps TPk ;
→ un paramètre noté m2, représentatif de la position VSV2 instantanée mesurée du vérin 22 (second vérin au sens de l'invention), sur la plage de temps TPk considérée (k=1,..,K). Ce paramètre est obtenu directement à partir des données d6. Autrement dit les composantes du vecteur m2 sont égales aux données d6 sur la plage de temps TPk ;
→ un paramètre noté m3, représentatif d'une prévision, à l'aide d'un premier modèle de prévision autorégressif noté ARX1, de la position VSVsel, sur la plage de temps TPk. Le modèle autorégressif ARX1 considéré sera détaillé ultérieurement ;
→ un paramètre noté m8, représentatif d'une valeur moyenne dite de référence de la somme des tensions efficaces (VA23_EA et V23_EB) des enroulements secondaires du vérin 21 sur une plage de temps de référence ou d'apprentissage notée TP0 prédéfinie. Le paramètre m8 est obtenu en évaluant la moyenne sur cette plage de référence de données de référence de type d9 issues de mesures réalisées sur une pluralité de turboréacteurs de même type ou appartenant à la même flotte que le turboréacteur équipé du système d'actionnement 2 ;
→ un paramètre noté m9, représentatif d'une valeur moyenne de la somme des tensions efficaces (VA23_EA et V23_EB) des enroulements secondaires du vérin 21 sur la plage de temps TPk considérée. Le paramètre m9 est obtenu en évaluant la moyenne des données d9 sur cette plage de temps TPk ;
→ un paramètre noté m10, représentatif d'une valeur moyenne dite de référence de la somme des tensions efficaces (VA24_EA et V24_EB) des enroulements secondaires du vérin 22 sur la plage de référence ou d'apprentissage TP0. Le paramètre m10 est obtenu en évaluant la moyenne sur cette plage de référence, de données de référence de type d10, issues de mesures réalisées sur une pluralité de turboréacteurs de même type ou appartenant à la même flotte que le turboréacteur équipe du système d'actionnement 2 ; et
→ un paramètre noté m11, représentatif d'une valeur moyenne de la somme des tensions efficaces (VA24_EA et V24_EB) des enroulements secondaires du vérin 22 sur la plage de temps TPk considérée. Le paramètre m11 est obtenu en évaluant la moyenne des données d10 sur cette plage de temps TPk.

- dans la catégorie CAT2 :

→ un paramètre noté m4, représentatif des coefficients du premier modèle autorégressif ARX1 précité, utilisé pour prévoir une position VSVsel (paramètre m3). Le paramètre m4 est évalué sur une fenêtre d'observation W0 de référence de taille N, à partir de données de référence de type d7 issues de mesures réalisées sur une pluralité de turboréacteurs de même type ou appartenant à la même flotte que le turboréacteur équipé du système d'actionnement 2 ;

→ un paramètre noté m5, représentatif d'une position globale des vérins 21 et 22 prédite par un deuxième modèle autorégressif, noté ARX2, en fonction du courant de commande iCMD de la servovalve 25.;

→ un paramètre noté m6, représentatif de la position du vérin 21, prédite par un troisième modèle autorégressif, noté ARX3, en fonction du courant de commande iCMD de la servovalve 25. ; et

→ un paramètre noté m7, représentatif de la position du vérin 22, prédite par un quatrième modèle autorégressif, noté ARX4, en fonction du courant de commande iCMD de la servovalve 25.

Les modèles autorégressifs ARX1-ARX4 ainsi que l'obtention des coefficients de ces modèles seront détaillés ultérieurement. On notera que les paramètres de la catégorie CAT2 sont ici des vecteurs dont les tailles sont déterminées par les nombre de coefficients considérés dans les modèles ARX1-ARX4.

- dans la catégorie CAT3 :

→ un paramètre noté m12, représentatif de l'écart moyen existant entre le courant de commande iCMD de la servovalve 25 et le courant de retour réellement mesuré pour la voie A de l'ECU si cette voie est active. Le paramètre m12 est égal à la moyenne sur la plage de temps TPk des données (d4-d11) ;

→ un paramètre noté m13, représentatif de l'écart moyen existant entre le courant de commande iCMD de la servovalve 25 et le courant de retour réellement mesuré pour la voie B de l'ECU si cette voie est active. Le paramètre m13 est égal à la moyenne sur la plage de temps TPk des données (d4-d12) ;

→ un paramètre noté m14, représentatif d'un courant de commande de référence moyen. Le paramètre m14 est évalué sur la plage de référence TP0, à partir de données de référence de type d4 issues de mesures réalisées sur une pluralité de turboréacteurs de même type ou appartenant à la même flotte que le turboréacteur équipé du système d'actionnement 2 ;

→ un paramètre noté m15, représentatif du courant de commande moyen de la servovalve 25. Le paramètre m15 est égal à la moyenne sur la plage de temps TPk des données d4 ;

→ un paramètre noté m16, représentatif d'un courant intégral de référence moyen de la boucle d'asservissement 3. Le paramètre m16 est évalué sur la plage de référence TP0, à partir de données de référence de type d14 issues de mesures réalisées sur une pluralité de turboréacteurs de même type ou appartenant à la même flotte que le turboréacteur équipé du système d'actionnement 2 ;

→ un paramètre noté m17, représentatif du courant intégral moyen de la boucle d'asservissement 3. Le paramètre m17 est égal à la moyenne sur la plage de temps TPk des données d14.

On notera que les paramètres précités sont des paramètres originaux intervenant dans la surveillance de la boucle d'asservissement 3. Ils seront préférentiellement tous considérés. Toutefois, en variante, on peut ne considérer qu'un sous-ensemble de ces paramètres, en fonction d'un compromis à évaluer entre performance et complexité.

L'estimation de ces paramètres de surveillance est réalisée à partir des données de fonctionnement d4 à d14, et des variables exogènes d1 à d3, échantillonnées sur les plages de temps TPk considérées (k=1,..,K).

De façon préférentielle, on choisira une plage de temps TPk dans les régimes établis en phase de croisière ou de ralenti au sol. Les inventeurs ont effectivement constaté que pendant cette phase de régime stationnaire, les symptômes sont plus marqués, permettant de ce fait une meilleure détection ainsi qu'une détection plus fiable des dégradations affectant la boucle d'asservissement.

Nous allons maintenant décrire succinctement les modèles autorégressifs utilisés pour estimer les paramètres m4-m7. On considère ici des modèles linéaires de type ARX (pour Auto Regressive model with eXternal inputs), connus de l'homme du métier. En variante, d'autres modèles autorégressifs peuvent être utilisés comme par exemple des modèles ARMAX.

De façon connue, un modèle ARX est un modèle autorégressif définissant une sortie y(t) en fonction d'une ou de plusieurs entrées et d'un résidu aléatoire de modélisation caractérisé par un bruit blanc de moyenne nulle η(t), t désignant l'instant d'échantillonnage considéré.

De façon avantageuse, dans l'exemple envisagé ici, les modèles ARX, ARX1-ARX5 ont pour entrées la variable d4 représentative du courant de commande iCMD de la servovalve 25 ainsi que les variables exogènes d1 à d3 (ou de façon équivalente, N2, WFM et PS3).

Ainsi, de façon plus précise :

- les modèles ARX1 et ARX2 considérés sont de la forme :

$$y(t) = d7(t) = \sum_{j=1}^{jd7} a_j d7(t-j) + \sum_{j=1}^{jd1} b_j d1(t-j) + \sum_{j=1}^{jd2} c_j d2(t-j) + \sum_{j=1}^{jd3} e_{ji} d3(t-j) + \sum_{j=1}^{jd4} f_j d4(t-j) + \eta(t)$$

- le modèle ARX4 est de la forme :

$$y(t) = d6(t) = \sum_{j=1}^{jd6} a_j d6(t-j) + \sum_{j=1}^{jd1} b_j d1(t-j) + \sum_{j=1}^{jd2} c_j d2(t-j) + \sum_{j=1}^{jd3} e_{ji} d3(t-j) + \sum_{j=1}^{jd4} f_j d4(t-j) + \eta(t)$$

- le modèle ARX3 est de la forme :

$$y(t) = d5(t) = \sum_{j=1}^{jd5} a_j d5(t-j) + \sum_{j=1}^{jd1} b_j d1(t-j) + \sum_{j=1}^{jd2} c_j d2(t-j) + \sum_{j=1}^{jd3} e_{ji} d3(t-j) + \sum_{j=1}^{jd4} f_j d4(t-j) + \eta(t)$$

où les éléments $a_j$, $b_j$, $c_j$, $e_j$ et $f_j$ désignent les coefficients des modèles ARX (on notera que ces coefficients ne sont pas nécessairement identiques pour les différents modèles, toutefois par souci de simplification, une seule notation est employée). Les quantités jd1, jd2, jd3, jd4, jd5, jd6 et jd7 désignent le nombre de coefficients pour chaque entrée et sortie des modèles ARX.

De façon générale, si y(t) désigne la sortie d'un modèle ARX (choisi parmi ARX1-ARX4), et $\theta$ le vecteur de taille J des coefficients du modèle ARX (J=jd1+jd2+jd3+jd5+jd6 par exemple pour y(t)=d6(t)), le vecteur $\theta$ peut être estimé selon des méthodes classiques connues de l'homme du métier, sur une fenêtre temporelle d'estimation de taille prédéfinie N.

Ainsi, si h(t) désigne le vecteur de taille J comprenant les observations des variables d'entrée du modèle ARX considéré, à différents instants (antérieurs ou égaux à t), et éventuellement des observations de y à des instants antérieurs à t, on peut écrire :

$$y(t) = h(t)\theta + \eta(t)$$
$$y(t-1) = h(t-1)\theta + \eta(t-1)$$
$$\dots$$
$$y(t-T+1) = h(t-T+1)\theta + \eta(t-T+1)$$

ce qui équivaut, sous forme matricielle, à rechercher $\theta$ tel que :

$$Y(t) = H(t)\theta + N(t) \quad (Eq.\ 1)$$

avec :

$$Y(t) = \begin{pmatrix} y(t) \\ y(t-1) \\ \vdots \\ y(t-T+1) \end{pmatrix} \qquad H(t) = \begin{pmatrix} h(t) \\ h(t-1) \\ \vdots \\ h(t-T+1) \end{pmatrix} \qquad N(t) = \begin{pmatrix} \eta(t) \\ \eta(t-1) \\ \vdots \\ \eta(t-T+1) \end{pmatrix}$$

La résolution de l'équation (Eq. 1) permet d'obtenir une estimée du vecteur $\theta$. Cette estimée définit :

- sur la fenêtre d'estimation de référence W0 mentionnée précédemment, le paramètre m4 lorsque le modèle ARX considéré dans l'équation (Eq. 1) est le modèle ARX1 ; cette estimée permet en outre d'évaluer le paramètre m3 en utilisant l'équation (Eq. 1) ; et
- sur la fenêtre d'estimation W mentionnée précédemment :

- le paramètre m5 lorsque le modèle ARX considéré dans l'équation (Eq. 1) est le modèle ARX2 ;
- le paramètre m6 lorsque le modèle ARX considéré dans l'équation (Eq. 1) est le modèle ARX3 ; et
- le paramètre m7 lorsque le modèle ARX considéré dans l'équation (Eq. 1) est le modèle ARX4.

L'ensemble des paramètres m1 à m17 ainsi estimés au cours de l'étape E20 est ensuite utilisé pour évaluer une série d'indicateurs (étape E30) sur chaque plage de temps considérées TPk.

Plus précisément, dans l'exemple envisagé ici, on évalue dix indicateurs à partir des paramètres m1 à m17, sur les plages de temps TP1,...,TPk. Ces dix indicateurs sont les suivants.

L'indicateur i_EVS représente l'écart quadratique moyen normalisé entre m5 et d7.

Plus précisément, on calcule la somme S_EVS des écarts $(m5 - d7)^2$ pour chaque plage de temps TP1,..., TPK. Ensuite, l'indicateur i_EVS est calculé en normalisant la somme S_EVS en recourant à une distribution statistique qui lui est assujettie, de moyenne de référence m0 et d'écart-type de référence $\sigma 0$ : i_EVS = (S_EVS - m0) / $\sigma 0$.

La distribution statistique précitée est par exemple déterminée lors d'une phase de calibration, par l'observation de la somme S_EVS sur une plage de temps d'apprentissage prédéfinie. Les inventeurs ont constaté que cette distribution suivait une loi normale, ce qui permet d'effectuer la normalisation précitée. Les autres indicateurs décrits ci-après sont normalisés de manière correspondante.

De manière similaire, l'indicateur i_EVA représente l'écart quadratique moyen normalisé entre les paramètres m1 et m6 et l'indicateur i_EVB représente l'écart quadratique moyen normalisé entre les paramètres m2 et m7. L'indicateur i_CID représente le paramètre m15 normalisé par le paramètre m14.

L'indicateur i_CINT représente le paramètre m17 normalisé par le paramètre m16.

L'indicateur i_EPA représente l'écart de prédiction de la position du vérin 21. Il est donné par la différence entre d'une part la position mesurée, représentée par le paramètre m1, et d'autre part la position m3 prédite par le modèle dont les coefficients sont donnés par le paramètre m4.

L'indicateur i_EPB représente l'écart de prédiction de la position du vérin 22. Il est donné par la différence entre d'une part la position mesurée, représentée par le paramètre m2, et d'autre part la position m3 prédite par le modèle dont les coefficients sont donnés par le paramètre m4.

L'indicateur i_SOMA représente le paramètre m9 normalisé par le paramètre m8.

L'indicateur i_SOMB représente le paramètre m11 normalisé par le paramètre m10.

L'indicateur i_EWRAP est égale au paramètre m12 ou au paramètre m13, en fonction de la voie active (indiqué par d13).

L'ensemble des indicateurs i_EVS, i_EVA, i_EVB, i_CID et i_CINT permet de détecter des dégradations de type mécaniques du système d'actionnement 2, par exemple un décalage du courant de commande du vérin 21 ou 22, une obturation du diaphragme de refroidissement du vérin 21 ou 22, une usure interne du corps du vérin 21 ou 22 pouvant induire une augmentation du débit de fuite interne de celui-ci.

Plus précisément, les valeurs des indicateurs i_EVS, LEVA, i_EVB, i_CID et i_CINT forment une matrice, également appelée matrice de signature, permettant de détecter et de localiser des dégradations. Plusieurs techniques connues de l'homme du métier permettent d'associer une matrice de signature à une dégradation particulière. Par exemple, la technique décrite dans le document FR 2 939 924 peut être utilisée et dans ce cas, les indicateurs i_EVS, LEVA, i_EVB, i_CID et i_CINT constituent des indicateurs standardisés au sens de ce document.

Les inventeurs ont constaté que les indicateurs précités permettaient une détection efficace et fiable des dégradations de type mécaniques. Toutefois, l'invention peut concerner également l'utilisation d'autres indicateurs.

De manière correspondante, l'ensemble des indicateurs i_EPA, i_EPB, i_SOMA, i_SOMB et i_EWRAP permet de détecter des dégradations de type électriques du système d'actionnement 2, par exemple des contacts intermittents sur la chaine de commande des vérins 21 et 22 par la voie A ou la voie B, et des contacts intermittents sur la chaine de mesure du vérin 21 ou 22.

Plus précisément, les valeurs des indicateurs i_EPA, i_EPB, i_SOMA, i_SOMB et i_EWRAP forment une matrice, également appelée matrice de signature, permettant de détecter et de localiser des dégradations. Plusieurs techniques connues de l'homme du métier permettent d'associer une matrice de signature à une dégradation particulière. Par exemple, la technique décrite dans le document FR 2 939 924 peut être utilisée et dans ce cas, les indicateurs i_EPA, i_EPB, i_SOMA, i_SOMB et i_EWRAP constituent des indicateurs standardisés au sens de ce document.

Les inventeurs ont constaté que les indicateurs précités permettaient une détection efficace et fiable des dégradations de type mécaniques. Toutefois, l'invention peut concerner également l'utilisation d'autres indicateurs.

Ainsi, à l'étape E50, le dispositif de surveillance 1 peut détecter une dégradation affectant la boucle d'asservissement 3 à partir des symptômes (signatures).

A l'étape E60, le dispositif de surveillance 1 vérifie si, à l'étape E50, une dégradation a été détectée.

Si une dégradation a été détectée, il émet alors un avis de maintenance identifiant cette dégradation ainsi que sa localisation (étape E70), et préconisant une maintenance sur la boucle d'asservissement (par exemple, remplacement d'un composant du système d'actionnement en fonction de la dégradation détectée).

Cet avis pourra être transmis ultérieurement à l'exploitant de l'aéronef à l'aide des moyens de communication 15 du dispositif de surveillance 1.

En revanche, si aucune dégradation n'est détectée, aucun avis de maintenance n'est délivré (étape E80) et la surveillance continue.

Dans le premier mode de réalisation décrit ici, on a considéré la surveillance de la boucle d'asservissement d'un système d'actionnement de VSV. Comme mentionné précédemment, l'invention conformément à ce premier mode de réalisation s'applique également à d'autres systèmes d'actionnement de géométries variables, tels que par exemple à des systèmes d'actionnement pilotant :

- des positions de vannes de décharge d'un compresseur du turboréacteur, comme les systèmes d'actionnement de VBV (Variable Bleed Valve) et de TBV (Transient Bleed Valve) ;
- un débit de carburant, comme les systèmes d'actionnement de FMV (Flow Modulation Valve) ; et
- des jeux aux sommets d'aube d'une turbine haute-pression ou basse-pression, comme les systèmes d'actionnement de HPTACC (High Pressure Turbine Active Clearance Control) ou LPTACC (Low Pressure Turbine Active Clearance Control).

En outre, pour ces autres systèmes d'actionnement, d'autres paramètres, et/ou indicateurs, symptômes et/ou signatures pourraient être envisagés.

Par exemple, pour une boucle d'asservissement d'un système de dosage du débit de carburant (FMV), on pourrait considérer comme indicateur supplémentaire, l'écart entre un débit commandé et un débit mesuré.

Pour une boucle d'asservissement d'un système d'actionnement de positions de vannes de décharge VBV de pression d'air, on pourrait considérer comme indicateur supplémentaire, un écart entre la commande et la position exécutée. Cet indicateur supplémentaire pourrait également être considéré pour une boucle d'asservissement d'un système d'actionnement des jeux aux sommets d'aube d'une turbine haute-pression ou basse-pression, comme les systèmes d'actionnement de HPTACC (High Pressure Turbine Active Clearance Control) ou LPTACC (Low Pressure Turbine Active Clearance Control).

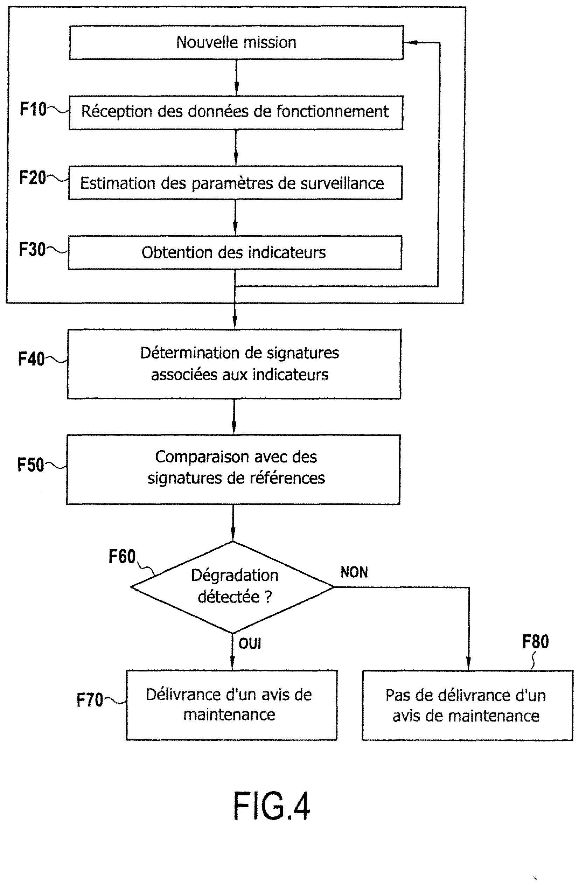

Nous allons maintenant décrire en référence aux figures 4-8 un second mode particulier de réalisation (non revendiqué).

*Second mode particulier de réalisation (non revendiqué) :*

La **figure 4** illustre les principales étapes du procédé de surveillance lorsqu'il est mis en œuvre par le dispositif de surveillance de la figure 1 conformément à un second mode de réalisation.

Selon ce second mode de réalisation, le procédé de surveillance comporte :

- pour chaque mission d'une pluralité de missions successives de l'aéronef :

  ◦ une étape d'estimation, à partir de données de fonctionnement de la boucle d'asservissement sur cette mission, d'un paramètre de surveillance représentatif d'un courant de commande de la servovalve du système d'actionnement et d'au moins un paramètre de surveillance représentatif d'une vitesse de vérin du système d'actionnement ;
  ◦ une étape d'obtention d'indicateurs en analysant des variations dudit au moins un paramètre de surveillance représentatif d'une vitesse de vérin en fonction du paramètre de surveillance représentatif d'un courant de commande ;

- une étape de détermination, à partir des indicateurs obtenus sur la pluralité de missions successives de l'aéronef, de signatures représentatives de l'évolution de ces indicateurs au cours des missions ; et
- une étape de comparaison de ces signatures avec des signatures de référence associées à au moins une dégradation prédéterminée susceptible d'affecter la boucle d'asservissement.

Dans l'exemple décrit ici, on envisage la surveillance d'une boucle d'asservissement d'un système d'actionnement pilotant la variation des angles de calage d'aubes de stator d'un turboréacteur.

Toutefois, cette hypothèse n'est en aucun cas limitative. L'invention selon ce second mode de réalisation s'applique également à d'autres systèmes d'actionnement de géométries variables, comme par exemple à des systèmes d'actionnement pilotant des positions de vannes de décharge d'un compresseur du turboréacteur, tels que des systèmes d'actionnement de VBV (Variable Bleed Valve).

En outre, dans l'exemple de la figure 1, le système d'actionnement comporte une servovalve commandant deux vérins solidaires mécaniquement. On notera toutefois que ce second mode de réalisation peut également s'appliquer à un système d'actionnement comprenant un seul vérin ou deux vérins non liés mécaniquement.

Conformément à ce second mode de réalisation, la surveillance de la boucle d'asservissement 3 du système d'actionnement 2 de VSV est mise en œuvre sur une pluralité de missions de l'aéronef, à travers différents ensembles de données parmi lesquels des données de fonctionnement de la boucle d'asservissement, des paramètres de surveillance, des indicateurs, et des signatures. Nous allons maintenant, en référence à la figure 4, décrire ces ensembles de données et la manière dont ils sont utilisés les uns par rapport aux autres pour la surveillance de la boucle d'asservissement 3.

Par données de fonctionnement de la boucle d'asservissement, on entend ici diverses données nécessaires au fonctionnement du système d'actionnement de VSV et plus particulièrement de la boucle d'asservissement au cours d'une mission de l'aéronef, et/ou représentatives de son fonctionnement au cours de la mission.

Dans l'exemple envisagé ici, on considère les données de fonctionnement suivantes :

- courant de commande de la voie active iCMD délivré à la servovalve 25 par l'unité de régulation 33 ; et
- position globale instantanée VSVsel des vérins, délivrée par l'unité de sélection 31.

Ces données de fonctionnement sont disponibles, à une fréquence d'échantillonnage fe prédéterminée (ex. fe=8kHz), pour chaque mission, au niveau du FADEC dans lequel est intégré ici le dispositif de surveillance 1 comme mentionné précédemment. Elles peuvent être issues de mesures réalisées à l'aide de capteurs connus équipant le turboréacteur ou accessibles par l'intermédiaire du calculateur ECU (comme par exemple pour la position globale instantanée VSVsel).

Les données de fonctionnement précitées sont transmises dans leur ensemble, pour chaque mission de l'aéronef, au dispositif de surveillance 1 pour l'estimation de paramètres de surveillance de la boucle d'asservissement 3 relatifs à cette mission (étape F10). On notera que ces données peuvent être transmises au dispositif de surveillance au fur et à mesure de leur acquisition ou en variante, après une période de temps prédéterminée (par exemple, à l'arrêt du turboréacteur en fin de mission, ou périodiquement durant son fonctionnement).

Par ailleurs, dans le second mode de réalisation décrit ici, l'ensemble des données de fonctionnement récoltées au cours d'une mission sont transmises au dispositif de surveillance. En variante, on pourra se contenter de transmettre des données enregistrées à des instants prédéterminés judicieusement choisis.

Dans le second mode de réalisation décrit ici, on envisage la surveillance de la boucle d'asservissement 3 au travers de deux paramètres de surveillance (étape F20), à savoir :

- un paramètre de surveillance m1' représentatif du courant de commande de la servovalve 25 du système d'actionnement 2, obtenu directement à partir des données de fonctionnement iCMD correspondantes ; et
- un paramètre de surveillance m2' représentatif d'une vitesse de vérin du système d'actionnement 2, obtenu à partir des données de fonctionnement VSVsel.

Plus précisément, dans l'exemple décrit ici, le paramètre m2' représentatif de la vitesse de vérin à l'instant kTe, Te désignant la période d'échantillonnage des données de fonctionnement (i.e. Te=1/fe), est approximée par l'équation suivante :

$$m2'(kTe) = \frac{VSVsel(kTe) - VSVsel((k-1)Te)}{Te}$$

*VSVsel(kTe)* désignant la valeur de VSVsel à l'instant kTe.

Les paramètres m1' et m2' ainsi estimés au cours de l'étape F20 pour chaque mission de l'aéronef sont ensuite utilisés pour évaluer une série d'indicateurs sur cette mission (étape F30).

Dans le second mode de réalisation décrit ici, on s'intéresse à trois indicateurs i1, i2, i3, obtenus en analysant une courbe C modélisant, sur la mission considérée, les variations du paramètre de surveillance m2' en fonction du paramètre de surveillance m1'. Cette courbe C est obtenue à partir des points M(kTe) dont les abscisses ml'(kTe) et ordonnées m2'(kTe) ont été évaluées à l'étape F20.

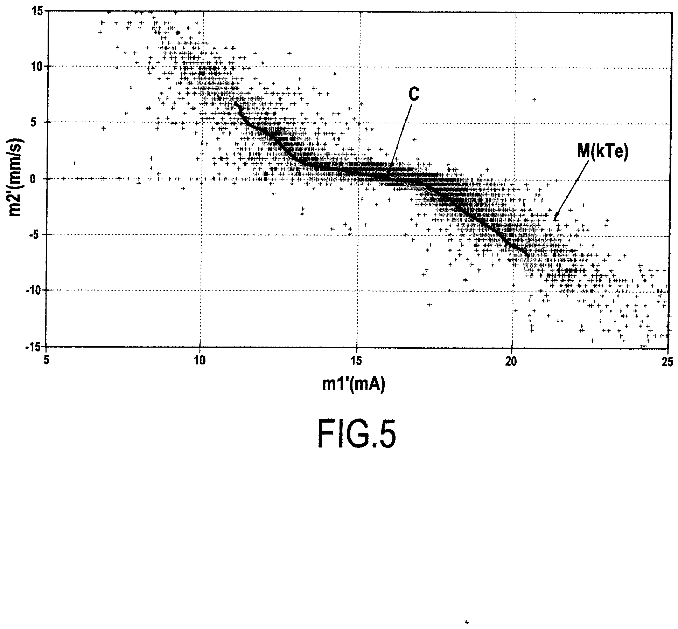

Un exemple d'une telle courbe est représenté sur la **figure 5.**

Plus particulièrement, dans l'exemple de la figure 5, du fait de la faible résolution de mesure des capteurs de positions 23 et 24, le paramètre m2' présente également une résolution assez faible. La courbe C est obtenue en moyennant, pour chaque valeur du paramètre m2', les abscisses m1' des points M ayant comme ordonnée la valeur m2'.

En outre, dans l'exemple de la figure 5, on ne retient pour C qu'un nombre limité de niveaux de vitesse (i.e. de m2'), à savoir 15 valeurs positives et 15 valeurs négatives.

Les points MC(I), I=1,...,N (avec N=30 sur la figure 5) de la courbe C ainsi obtenue sont alors stockés dans un fichier F, placé dans la mémoire morte 13 du dispositif 1 de surveillance.

Dans le mode de réalisation décrit ici, les indicateurs i1, i2 et i3 correspondent à des caractéristiques particulières de la courbe C, à savoir :

- i1 correspond au courant de repos ou d'équilibre de la boucle d'asservissement, c'est-à-dire lorsque la vitesse de vérin est nulle (pas de déplacement des vérins) ;
- i2 et i3 correspondent respectivement à l'abscisse et à l'ordonnée d'un point particulier de la courbe, situé au-delà du point d'équilibre de la boucle d'asservissement pour lequel la vitesse de vérin est nulle (i.e. d'abscisse supérieure à l'abscisse du point d'équilibre), et pour lequel on observe un changement de pente de part et d'autre de ce point.

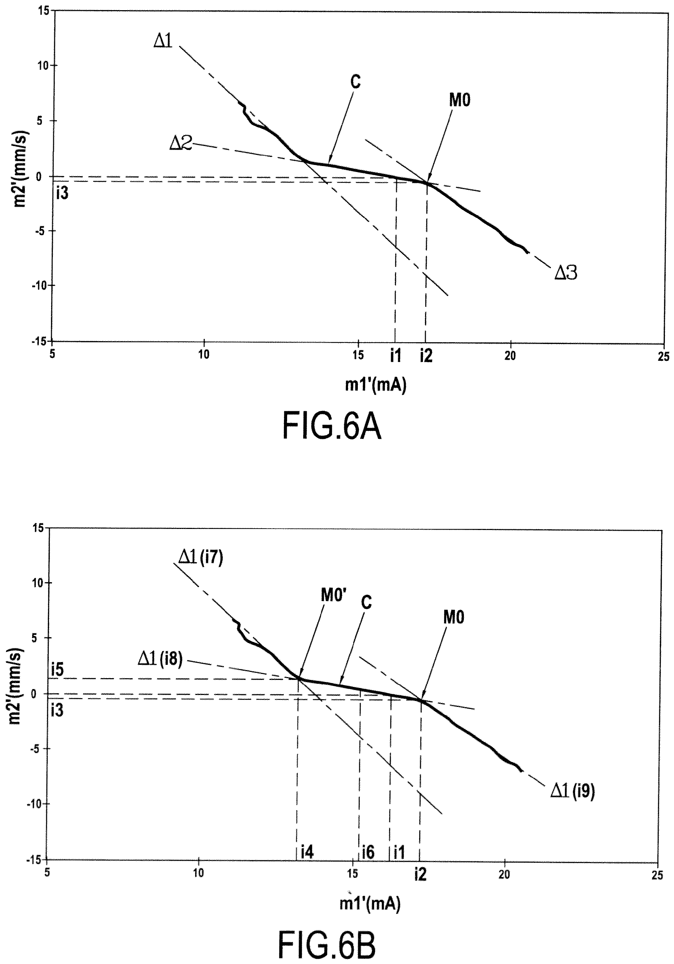

La **figure 6A** illustre les indicateurs i1, i2 et i3 obtenus à partir de la courbe C représentée sur la figure 5.

Dans le mode de réalisation décrit ici, ces indicateurs sont extraits automatiquement par le dispositif de surveillance 1, à partir des points de la courbe C stockés dans le fichier F.

Plus particulièrement pour i1, le dispositif de surveillance 1 recherche dans le fichier F un point MC(I) d'ordonnée m2' nulle. L'indicateur i1 est donné par l'abscisse de ce point. Si aucun point d'ordonnée nulle n'est présent dans le fichier F, le dispositif de surveillance 1 évalue i1 par interpolation à partir des abscisses de deux points consécutifs MC(I) et MC(I+1) d'ordonnées respectives positive et négative.

Pour i2 et i3, le dispositif de surveillance 1 évalue dans un premier temps, pour chaque couple de points consécutifs MC(I) et MC(I+1) de la courbe C, l'écart relatif entre leurs abscisses. Puis il calcule la moyenne m et l'écart type σ des écarts ainsi évalués, de façon connue en soi. Un écart entre deux points consécutifs MC(I) et MC(I+1) de la courbe C supérieur à m+2xσ révèle au dispositif de surveillance 1 que le point M0 de changement de pente est atteint. Le dispositif de surveillance 1 déduit les indicateurs i2 et i3 des coordonnées du point M0=MC(I) stocké dans le fichier F.

En variante, les indicateurs i1, i2 et i3 peuvent être extraits par un opérateur à partir d'une représentation graphique de la courbe C et être fournis au dispositif de surveillance 1, par l'intermédiaire par exemple de moyens d'entrée/sortie du dispositif de surveillance 1 (non représentés) ou via les moyens de communication 15.

Dans le second mode de réalisation décrit ici, on n'envisage pour la surveillance de la boucle d'asservissement 3 que les trois indicateurs i1, i2 et i3 précédemment décrits. Toutefois cette hypothèse n'est pas limitative, et d'autres indicateurs peuvent être extraits de la courbe C en sus des indicateurs i1, i2, i3, comme par exemple :

- des indicateurs i4 et i5 correspondant respectivement à l'abscisse et à l'ordonnée d'un autre point M0' de la courbe C pour lequel on observe un changement de pente. Ce point est situé avant le point d'équilibre de la boucle d'asservissement pour lequel la vitesse de vérin est nulle (i.e. d'abscisse inférieure à celle du point d'équilibre). Pour déterminer les indicateurs i4 et i5, le dispositif de surveillance 1 recherche un écart entre deux points consécutifs MC(I) et MC(I+1) de la courbe C inférieur à m+2xσ. Le dispositif de surveillance 1 déduit les indicateurs i4 et i5 des coordonnées du point M0'=MC(I) stocké dans le fichier F ;
- un indicateur i6 correspondant au courant de repos du moteur couple de la servovalve 25 : cet indicateur correspond à l'abscisse du point médian du segment [M0M0'] ;
- un indicateur i7 correspondant au coefficient directeur d'une droite Δ1 obtenue par régression linéaire des points de la courbe C situés en amont du point M0' (i.e. d'abscisses inférieures à l'abscisse de M0') ;
- un indicateur i8 correspondant au coefficient directeur d'une droite Δ2 obtenue par régression linéaire des points de la courbe C situés entre les points M0' et M0 (i.e. d'abscisses comprises entre les abscisses des points M0' et M0) ; et
- un indicateur i9 correspondant au coefficient directeur d'une droite Δ3 obtenue par régression linéaire des points de la courbe C situés en aval du point M0 (i.e. d'abscisses supérieures à l'abscisse de M0).

Les moyens permettant d'obtenir les indicateurs i7 à i9 sont connus de l'homme du métier et ne seront pas décrits davantage ici.

Les indicateurs i4 à i9 extraits de la courbe C représentée sur la figure 5 sont illustrés à la **figure 6B.**

L'ensemble des indicateurs i1, i2 et i3 obtenus à l'étape F30 pour les différentes missions de l'aéronef est ensuite utilisé pour détecter des dégradations de type mécaniques du système d'actionnement 2.

Plus précisément, dans le second mode de réalisation décrit ici, les valeurs des indicateurs i1, i2 et i3 obtenues sur les différentes missions de l'aéronef sont dans un premier temps agrégées pour former une signature représentative du fonctionnement de la boucle d'asservissement (étape F40).

Par exemple, cette signature est un vecteur dont les composantes sont les valeurs des indicateurs i1, i2, et i3 obtenues pour les différentes missions de l'aéronef. Les indicateurs i1, i2 et i3 peuvent être normalisés si besoin avant de déterminer la signature correspondante.

En variante, on peut déterminer plusieurs signatures, chaque signature étant associée à un indicateur particulier.

Puis cette signature est comparée à des signatures de référence, chaque signature de référence étant associée à une dégradation prédéterminée et comprenant les valeurs des indicateurs i1, i2 et i3 en présence de cette dégradation (étape F50). La signature de référence associée à une dégradation particulière reflète les valeurs des indicateurs à partir desquelles on considère que la dégradation est présente, c'est-à-dire typiquement les valeurs des indicateurs pour lesquelles le système d'actionnement n'est plus fonctionnel ou pour lesquelles on déclenche l'émission d'un mot de panne.

Plusieurs techniques connues de l'homme du métier permettent d'associer une signature de référence à une dégradation particulière. Par exemple, les signatures de référence peuvent être déterminées à partir de critères établis par expertise, conformément à des comportements caricaturaux des indicateurs en cas de dégradation.

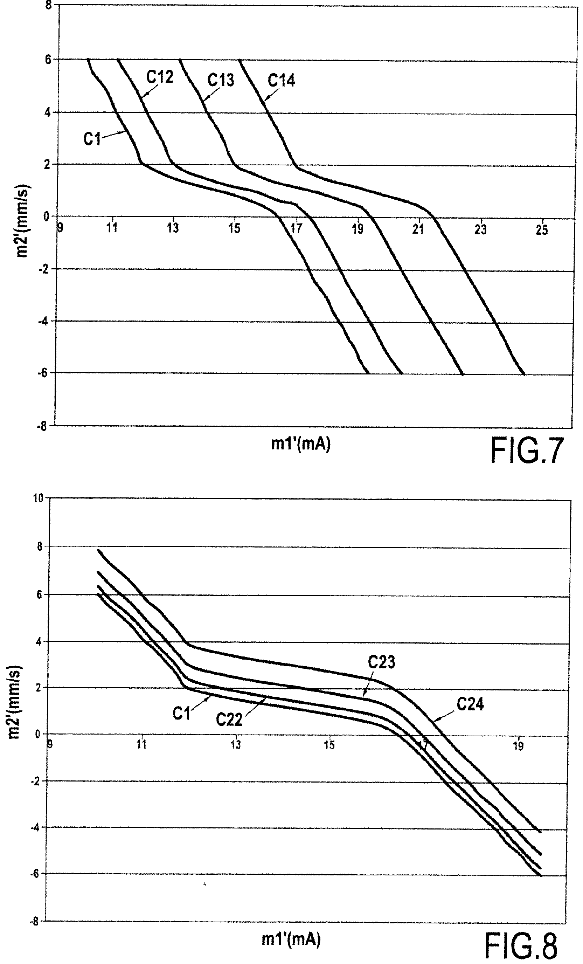

Les **figures 7 et 8** illustrent de tels comportements respectivement :

- en présence d'une dérive du courant de repos de la servovalve 25 du système d'actionnement 2 ; et
- et en présence d'une fuite opérant entre les chambres d'un vérin 21, 22 du système d'actionnement 2.

Plus précisément, sur la figure 7 :

- la courbe C1 illustre les variations de la vitesse de vérin en fonction du courant de commande en l'absence de dégradation ; et
- les courbes C12, C13 et C14 représentent les variations de la vitesse de vérin en fonction du courant de commande en présence d'une dérive du courant de repos de +1mA (milliampère), +3mA et +5mA respectivement.

Autrement dit, une augmentation de la dérive du courant de repos de la servovalve se traduit par un décalage horizontal et vers la droite de la courbe modélisant les variations de la vitesse de vérin en fonction du courant de commande.

De façon similaire, sur la figure 8 :

- la courbe C1 illustre les variations de la vitesse de vérin en fonction du courant de commande en l'absence de dégradation ; et
- les courbes C22, C23 et C24 représentent les variations de la vitesse de vérin en fonction du courant de commande en présence d'une fuite interne d'un vérin de 1 bar, 4 bars et 7 bars respectivement.

Autrement dit, une amplification de la fuite interne de vérin se traduit par un décalage vertical et vers le haut de la courbe modélisant les variations de la vitesse de vérin en fonction du courant de commande.

L'étape de comparaison à proprement parler de la ou des signatures associées aux indicateurs i1, i2 et i3 peut être réalisée selon différentes techniques, connues de l'homme du métier. Par exemple, on peut utiliser la méthode décrite dans le document FR 2 939 924 dans laquelle le vecteur d'anomalie et les vecteurs de référence correspondent respectivement à la signature et aux signatures de référence de l'invention.

Cette comparaison permet de détecter si une défaillance particulière associée à une signature de référence, affecte la boucle d'asservissement 3.

A l'étape F60, le dispositif de surveillance 1 vérifie si, à l'étape F50, une dégradation a été détectée.

Si une dégradation a été détectée, il émet alors un avis de maintenance identifiant cette dégradation ainsi que sa localisation (étape F70), et préconisant une maintenance sur la boucle d'asservissement (par exemple, remplacement d'un composant du système d'actionnement en fonction de la dégradation détectée).

Cet avis pourra être transmis ultérieurement à l'exploitant de l'aéronef à l'aide des moyens de communication 15 du dispositif de surveillance 1.

En revanche, si aucune dégradation n'est détectée, aucun avis de maintenance n'est délivré (étape F80) et la surveillance continue.

Dans le mode de réalisation décrit ici, on a considéré la surveillance de la boucle d'asservissement d'un système d'actionnement de VSV. Comme mentionné précédemment, l'invention s'applique également à d'autres systèmes d'actionnement. En outre, pour ces autres systèmes d'actionnement, d'autres paramètres, et/ou indicateurs, et/ou signatures pourraient être envisagés.

Par ailleurs, dans le mode de réalisation décrit ici, les deux vérins du système d'actionnement sont solidaires mécaniquement : ils sont donc animés de la même vitesse, d'où la prise en compte de la position globale instantanée VSVsel pour détecter et localiser une potentielle dégradation.

En variante, dans un autre mode de réalisation, lorsque les deux vérins 21 et 22 du système d'actionnement 2 ne sont pas solidaires mécaniquement, il peut s'avérer judicieux d'extraire des indicateurs (par exemple les indicateurs i1, i2 et i3) d'une part, d'une courbe modélisant les variations de la vitesse du vérin 21 (obtenue à partir des positions VSV1 du vérin 21 mesurées par le capteur 23) en fonction du courant de commande iCMD, et d'autre part, d'une courbe modélisant les variations de la vitesse du vérin 22 (obtenue à partir des positions VSV2 du vérin 22 mesurées par le capteur 24) en fonction du courant de commande iCMD. De cette sorte, il est possible de détecter une dégradation affectant les vérins 21 et 22 et de déterminer, grâce à une ou plusieurs signatures de référence appropriées, quel vérin affecte cette dégradation.

Par ailleurs, la surveillance des positions VSV1 et VSV2 peut avantageusement permettre de détecter une dégradation affectant les capteurs de position 23 et 24 : en effet, en fonctionnement nominal ces deux capteurs doivent reporter des mesures similaires.

**Revendications**

1. Procédé de surveillance d'une boucle d'asservissement (3) d'un système d'actionnement (2) de géométries variables d'un turboréacteur équipant un aéronef, ce système d'actionnement comprenant une servovalve (25) commandant un premier et un second vérins (21, 22), ledit procédé comportant :

    - une étape d'estimation (E20) d'une pluralité de paramètres (m1-m17) de surveillance à partir de données de fonctionnement (d4-d14) de la boucle d'asservissement (3), lesdits paramètres de surveillance étant sélectionnés parmi au moins une des catégories de paramètres suivantes :

        ◦ une catégorie de paramètres représentatifs d'une position (VSV1, VSV2, VSVsel) des vérins (21, 22) ;
        ◦ une catégorie de paramètres représentatifs d'une vitesse des vérins (21, 22);
        ◦ une catégorie de paramètres représentatifs de coefficients de modèles autorégressifs utilisés pour prévoir une position des vérins en fonction d'un courant de commande (iCMD) de la servovalve (25) ; et
        ◦ une catégorie de paramètres représentatifs du courant de commande (iCMD) de la servovalve (25) ou d'un courant intégral de la boucle d'asservissement (3) ;

    - une étape d'obtention (E30) d'une pluralité d'indicateurs (i_EVS, LEVA, i_EVB, i_CID, i_CINT, i_EPA, i_EPB, i_SOMA, i_SOMB, i_EWRAP ; i1, i2, i3) à partir des paramètres de surveillance ;
    - une étape de détermination (E40) d'au moins une signature à partir des valeurs d'au moins une partie des indicateurs ; et
    - une étape de détection et de localisation (E50) d'une dégradation affectant la boucle d'asservissement en fonction de ladite au moins une signature déterminée ;
    et dans lequel :
    la catégorie de paramètres représentatifs d'une position des vérins (21, 22) comprend au moins l'un des paramètres suivants :

        ◦ un paramètre (m1) représentatif d'une position instantanée (VSV1) mesurée du premier vérin (21) ;
        ◦ un paramètre (m2) représentatif d'une position instantanée (VSV2) mesurée du deuxième vérin (22) ;
        ◦ un paramètre (m6) représentatif d'une prévision de la position du premier vérin (21) ;
        ◦ un paramètre (m7) représentatif d'une prévision de la position du deuxième vérin (22) ; et
        ◦ un paramètre (m5) représentatif de la prévision d'une position globale de vérin ;

    - la pluralité d'indicateurs comprend :

        ◦ un indicateur i_EVS représentant l'écart quadratique moyen normalisé entre le paramètre (m5) représentatif de la prévision d'une position globale de vérin et une position globale instantanée (VSVsel) des vérins (21, 22) ;
        ◦ un indicateur i_EVA représentant l'écart quadratique moyen normalisé entre le paramètre (m1) représentatif d'une position instantanée (VSV1) mesurée du premier vérin (21) et le paramètre (m6) représentatif de la prévision d'une position du premier vérin ;
        ◦ un indicateur i_EVB représentant l'écart quadratique moyen normalisé entre le paramètre (m2) représentatif d'une position instantanée (VSV2) mesurée du second vérin (22) et le paramètre (m7) représentatif de la prévision d'une position du deuxième vérin ;
        ◦ un indicateur i_CID déterminé en fonction d'un paramètre (m15) représentatif du courant de commande moyen de la servovalve (25), normalisé par un paramètre (m14) déterminé en fonction d'un courant de commande de référence ; et
        ◦ un indicateur i_CINT déterminé en fonction d'un paramètre (m17) représentatif du courant intégral moyen de la boucle d'asservissement (3), normalisé par un paramètre (m16) représentatif d'un courant intégral de référence.

**2.** Procédé de surveillance selon la revendication 1 dans lequel au moins un desdits paramètres (m4-m7) est estimé à partir d'un modèle autorégressif dépendant d'au moins une variable exogène (d1-d3) choisie parmi :

- une pression d'air d'une chambre de combustion du turboréacteur ;
- un débit de carburant dosé dans au moins un injecteur de la chambre de combustion du turboréacteur ; et
- une vitesse de rotation d'un arbre haute pression du turboréacteur.

**3.** Procédé de surveillance selon la revendication 1 ou 2 dans lequel la position du premier vérin, respectivement du deuxième vérin, est mesurée par un capteur de position comprenant des enroulements secondaires, les tensions efficaces des enroulements secondaires dépendant de la position du vérin, la pluralité d'indicateurs comprend :

- un indicateur i_EPA représentatif d'un écart de prédiction de la position du premier vérin (21) ;
- un indicateur i_EPB représentatif d'un écart de prédiction de la position du second vérin (22) ;
- un indicateur i_SOMA déterminé en fonction d'un paramètre (m9) représentant une valeur moyenne de la somme des tensions efficaces (VA23_EA et V23_EB) des enroulements secondaires du capteur de position du premier vérin (21), normalisé par un paramètre (m8) représentatif d'une position moyenne de référence du premier vérin (21) ;
- un indicateur i_SOMB déterminé en fonction d'un paramètre (m11) représentant une valeur moyenne de la somme des tensions efficaces (VA24_EA et V24_EB) des enroulements secondaires du capteur de position du second vérin (22), normalisé par un paramètre (m10) représentatif d'une position moyenne de référence du second vérin (22) ;
- un indicateur i_EWRAP représentatif de l'écart moyen (m12, m13) existant entre le courant de commande (iCMD) de la servovalve (25) et un courant de retour réellement mesuré.

**4.** Procédé de surveillance selon l'une quelconque des revendications 1 à 3 dans lequel le système d'actionnement est un système d'actionnement de géométries variables choisies parmi :

- des positions de vanne de décharge d'un compresseur du turboréacteur,
- un débit de carburant,
- des jeux aux sommets d'aube d'une turbine haute-pression ou basse-pression,
- des angles de calage d'aubes stators à calage variable de redresseurs de compresseur.

**5.** Programme d'ordinateur comportant des instructions pour l'exécution des étapes d'un procédé de surveillance selon l'une quelconque des revendications 1 à 4 lorsque ledit programme est exécuté par un ordinateur.

**6.** Dispositif de surveillance d'une boucle d'asservissement (3) d'un système d'actionnement (2) de géométries variables d'un turboréacteur équipant un aéronef, ce système d'actionnement comprenant une servovalve (25) commandant un premier et un second vérins (21, 22), ledit dispositif comportant :

- des moyens d'estimation d'une pluralité de paramètres (m1-m17) de surveillance à partir de données de fonctionnement (d4-d14) de la boucle d'asservissement (3), lesdits paramètres de surveillance étant sélectionnés parmi au moins une des catégories de paramètres suivantes :

  ◦ une catégorie de paramètres représentatifs d'une position (VSV1, VSV2, VSVsel) des vérins (21, 22) ;
  ◦ une catégorie de paramètres représentatifs d'une vitesse des vérins (21, 22) ;
  ◦ une catégorie de paramètres représentatifs de coefficients de modèles autorégressifs utilisés pour prévoir une position des vérins en fonction d'un courant de commande (iCMD) de la servovalve (25) ; et
  ◦ une catégorie de paramètres représentatifs du courant de commande (iCMD) de la servovalve (25) ou d'un courant intégral de la boucle d'asservissement (3) ;

- des moyens d'obtention d'une pluralité d'indicateurs (i_EVS, LEVA, i_EVB, i_CID, i_CINT, i_EPA, i_EPB, i_SOMA, i_SOMB, i_EWPAP ; i1, i2, i3) à partir des paramètres de surveillance ;
- des moyens de détermination d'au moins une signature à partir des valeurs d'au moins une partie des indicateurs ; et
- des moyens de détection et de localisation d'une dégradation affectant la boucle d'asservissement en fonction de ladite au moins une signature déterminée ;
et dans lequel
- la catégorie de paramètres représentatifs d'une position des vérins (21, 22) comprend au moins l'un des paramètres suivants :

◦ un paramètre (m1) représentatif d'une position instantanée (VSV1) mesurée du premier vérin (21) ;
◦ un paramètre (m2) représentatif d'une position instantanée (VSV2) mesurée du deuxième vérin (22) ;
◦ un paramètre (m6) représentatif d'une prévision de la position du premier vérin (21) ;
◦ un paramètre (m7) représentatif d'une prévision de la position du deuxième vérin (22) ; et
◦ un paramètre (m5) représentatif de la prévision d'une position globale de vérin ;

- la pluralité d'indicateurs comprend :

◦ un indicateur i EVS représentant l'écart quadratique moyen normalisé entre le paramètre (m5) représentatif de la prévision d'une position globale de vérin et une position globale instantanée (VSVsel) des vérins (21, 22) ;
◦ un indicateur i EVA représentant l'écart quadratique moyen normalisé entre le paramètre (m1) représentatif d'une position instantanée (VSV1) mesurée du premier vérin (21) et le paramètre (m6) représentatif de la prévision d'une position du premier vérin ;
◦ un indicateur i EVB représentant l'écart quadratique moyen normalisé entre le paramètre (m2) représentatif d'une position instantanée (VSV2) mesurée du second vérin (22) et le paramètre (m7) représentatif de la prévision d'une position du deuxième vérin ;
◦ un indicateur i CID déterminé en fonction d'un paramètre (m15) représentatif du courant de commande moyen de la servovalve (25), normalisé par un paramètre (m14) déterminé en fonction d'un courant de commande de référence ; et
◦ un indicateur i CINT déterminé en fonction d'un paramètre (ml7) représentatif du courant intégral moyen de la boucle d'asservissement (3), normalisé par un paramètre (m16) représentatif d'un courant intégral de référence.

## Patentansprüche

1. Verfahren zur Überwachung einer Servoschleife (3) eines Betätigungssystems (2) für variable Geometrien eines Turbinenstrahltriebwerks, mit dem ein Luftfahrzeug ausgerüstet ist, wobei das Betätigungssystem ein Servoventil (25) umfasst, das einen ersten und einen zweiten Zylinder (21, 22) steuert, wobei das Verfahren beinhaltet:

- einen Schritt der Schätzung (E20) mehrerer Überwachungsparameter (m1-m17) ausgehend von Funktionsdaten (d4-d14) der Servoschleife (3), wobei die Überwachungsparameter aus zumindest einer der folgenden Kategorien von Parametern ausgewählt sind:

◦ einer Kategorie von Parametern, die eine Position (VSV1, VSV2, VSVsel) der Zylinder (21, 22) repräsentieren,
◦ einer Kategorie von Parametern, die eine Geschwindigkeit der Zylinder (21, 22) repräsentieren,
◦ einer Kategorie von Parametern, die Koeffizienten von autoregressiven Modellen repräsentieren, die verwendet werden, um eine Position der Zylinder in Abhängigkeit von einem Steuerstrom (iCMD) des Servoventils (25) vorauszusagen, und
◦ einer Kategorie von Parametern, die den Steuerstrom (iCMD) des Servoventils (25) oder einen Gesamtstrom der Servoschleife (3) repräsentieren,
◦ einen Schritt des Erhalts (E30) mehrerer Indikatoren (i_EVS, i_EVA, i_EVB, i_CID, i CINT, i_EPA, i_EPB, i_SOMA, i_SOMB, i_EWRAP; i1, i2, i3) ausgehend von den Überwachungsparametern,

- einen Schritt der Bestimmung (E40) zumindest einer Signatur ausgehend von den Werten zumindest eines Teils der Indikatoren, und
- einen Schritt der Erfassung und Lokalisierung (E50) einer Verschlechterung, welche die Servoschleife beeinträchtigt, in Abhängigkeit von der zumindest einen bestimmten Signatur,
und wobei:
die Kategorie von Parametern, die eine Position der Zylinder (21, 22) repräsentieren, zumindest einen der folgenden Parameter umfasst:

◦ einen Parameter (m1), der eine gemessene momentane Position (VSV1) des ersten Zylinders (21) repräsentiert,

◦ einen Parameter (m2), der eine gemessene momentane Position (VSV2) des zweiten Zylinders (22) repräsentiert,
◦ einen Parameter (m6), der eine Vorhersage der Position des ersten Zylinders (21) repräsentiert,
◦ einen Parameter (m7), der eine Vorhersage der Position des zweiten Zylinders (22) repräsentiert, und
◦ einen Parameter (m5), der die Vorhersage einer globalen Zylinderposition repräsentiert,

- wobei die mehreren Indikatoren umfassen:

◦ einen Indikator i_EVS, der die normalisierte mittlere quadratische Abweichung zwischen dem Parameter (m5), der die Vorhersage einer globalen Zylinderposition repräsentiert, und einer momentanen globalen Position (VSVsel) der Zylinder (21, 22) repräsentiert,
◦ einen Indikator i_EVA, der die normalisierte mittlere quadratische Abweichung zwischen dem Parameter (m1), der eine gemessene momentane Position (VSV1) des ersten Zylinders (21) repräsentiert, und dem Parameter (m6), der die Vorhersage einer Position des ersten Zylinders repräsentiert, repräsentiert,
◦ einen Indikator i_EVB, der die normalisierte mittlere quadratische Abweichung zwischen dem Parameter (m2), der eine gemessene momentane Position (VSV2) des zweiten Zylinders (22) repräsentiert, und dem Parameter (m7), der die Vorhersage einer Position des zweiten Zylinders repräsentiert, repräsentiert,
◦ einen Indikator i_CID, der in Abhängigkeit von einem Parameter (m15) bestimmt wird, der den mittleren Steuerstrom des Servoventils (25) repräsentiert, normalisiert durch einen Parameter (m14), der in Abhängigkeit von einem Referenz-Steuerstrom bestimmt wird, und
◦ einen Indikator i_CINT, der in Abhängigkeit von einem Parameter (m17) bestimmt wird, der den mittleren Gesamtstrom der Servoschleife (3) repräsentiert, normalisiert durch einen Parameter (m16), der einen Referenz-Gesamtstrom repräsentiert.

2. Verfahren zur Überwachung nach Anspruch 1, wobei zumindest einer der Parameter (m4-m7) ausgehend von einem autoregressiven Modell geschätzt wird, abhängig von zumindest einer exogenen Variable (d1-d3), die ausgewählt ist aus:

- einem Luftdruck einer Verbrennungskammer des Turbinenstrahltriebwerks,
- einer Brennstoffströmungsrate, die in zumindest einen Injektor der Verbrennungskammer des Turbinenstrahltriebwerks dosiert wird, und
- einer Drehzahl einer Hochdruckwelle des Turbinenstrahltriebwerks.

3. Verfahren zur Überwachung nach Anspruch 1 oder 2, wobei die Position des ersten Zylinders bzw. des zweiten Zylinders durch einen Positionssensor gemessen wird, der Sekundärwicklungen umfasst, wobei die effektiven Spannungen der Sekundärwicklungen von der Position des Zylinders abhängig sind, wobei die mehreren Indikatoren umfassen:

- einen Indikator i_EPA, der eine Abweichung der Vorhersage der Position des ersten Zylinders (21) repräsentiert,
- einen Indikator i_EPB, der eine Abweichung der Vorhersage der Position des zweiten Zylinders (22) repräsentiert,
- einen Indikator i_SOMA, der in Abhängigkeit von einem Parameter (m9) bestimmt wird, der einen Mittelwert der Summe der effektiven Spannungen (VA23_EA und V23_EB) der Sekundärwicklungen des Positionssensors des ersten Zylinders (21) repräsentiert, normalisiert durch einen Parameter (m8), der eine mittlere Referenzposition des ersten Zylinders (21) repräsentiert,
- einen Indikator i_SOMB, der in Abhängigkeit von einem Parameter (m11) bestimmt wird, der einen Mittelwert der Summe der effektiven Spannungen (VA24_EA und V24_EB) der Sekundärwicklungen des Positionssensors des zweiten Zylinders (22) repräsentiert, normalisiert durch einen Parameter (m10), der eine mittlere Referenzposition des zweiten Zylinders (22) repräsentiert,
- einen Indikator i_EWRAP, der die mittlere Abweichung (m12, m13) repräsentiert, die zwischen dem Steuerstrom (iCMD) des Servoventils (25) und einem reell gemessenen Rückstrom besteht.

4. Verfahren zur Überwachung nach einem der Ansprüche 1 bis 3, wobei das Betätigungssystem ein Betätigungssystem für variable Geometrien ist, ausgewählt aus:

- den Auslassventilpositionen eines Kompressors des Turbinenstrahltriebwerks,
- einer Brennstoffströmungsrate,

- den Spielen an den Schaufelspitzen einer Hochdruck- oder Niederdruckturbine,
- den Anstellwinkeln von Statorschaufeln mit variabler Anstellung von Kompressorstatoren.

5. Computerprogramm, das Anweisungen zur Ausführung der Schritte eines Verfahrens zur Überwachung nach einem der Ansprüche 1 bis 4 beinhaltet, wenn das Programm von einem Computer ausgeführt wird.

6. Vorrichtung zur Überwachung einer Servoschleife (3) eines Betätigungssystems (2) für variable Geometrien eines Turbinenstrahltriebwerks, mit dem ein Luftfahrzeug ausgerüstet ist, wobei das Betätigungssystem ein Servoventil (25) umfasst, das einen ersten und einen zweiten Zylinder (21, 22) steuert, wobei die Vorrichtung beinhaltet:

- Mittel zur Schätzung mehrerer Überwachungsparameter (m1-m17) ausgehend von Funktionsdaten (d4-d14) der Servoschleife (3), wobei die Überwachungsparameter aus zumindest einer der folgenden Kategorien von Parametern ausgewählt sind:

  ◦ einer Kategorie von Parametern, die eine Position (VSV1, VSV2, VSVsel) der Zylinder (21, 22) repräsentieren,
  ◦ einer Kategorie von Parametern, die eine Geschwindigkeit der Zylinder (21, 22) repräsentieren,
  ◦ einer Kategorie von Parametern, die Koeffizienten von autoregressiven Modellen repräsentieren, die verwendet werden, um eine Position der Zylinder in Abhängigkeit von einem Steuerstrom (iCMD) des Servoventils (25) vorauszusagen, und
  ◦ einer Kategorie von Parametern, die den Steuerstrom (iCMD) des Servoventils (25) oder einen Gesamtstrom der Servoschleife (3) repräsentieren,

- Mittel zum Erhalt mehrerer Indikatoren (i_EVS, i_EVA, i_EVB, i_CID, i_CINT, i_EPA, i_EPB, i_SOMA, i_SOMB, i_EWRAP; i1, i2, i3) ausgehend von den Überwachungsparametern,
- Mittel zur Bestimmung zumindest einer Signatur ausgehend von den Werten zumindest eines Teils der Indikatoren, und
- Mittel zur Erfassung und Lokalisierung einer Verschlechterung, welche die Servoschleife beeinträchtigt, in Abhängigkeit von der zumindest einen bestimmten Signatur,
und wobei
- die Kategorie von Parametern, die eine Position der Zylinder (21, 22) repräsentieren, zumindest einen der folgenden Parameter umfasst:

  ◦ einen Parameter (m1), der eine gemessene momentane Position (VSV1) des ersten Zylinders (21) repräsentiert,
  ◦ einen Parameter (m2), der eine gemessene momentane Position (VSV2) des zweiten Zylinders (22) repräsentiert,
  ◦ einen Parameter (m6), der eine Vorhersage der Position des ersten Zylinders (21) repräsentiert,
  ◦ einen Parameter (m7), der eine Vorhersage der Position des zweiten Zylinders (22) repräsentiert, und
  ◦ einen Parameter (m5), der die Vorhersage einer globalen Zylinderposition repräsentiert,

- wobei die mehreren Indikatoren umfassen:

  ◦ einen Indikator i_EVS, der die normalisierte mittlere quadratische Abweichung zwischen dem Parameter (m5), der die Vorhersage einer globalen Zylinderposition repräsentiert, und einer momentanen globalen Position (VSVsel) der Zylinder (21, 22) repräsentiert,
  ◦ einen Indikator i_EVA, der die normalisierte mittlere quadratische Abweichung zwischen dem Parameter (m1), der eine gemessene momentane Position (VSV1) des ersten Zylinders (21) repräsentiert, und dem Parameter (m6), der die Vorhersage einer Position des ersten Zylinders repräsentiert, repräsentiert,
  ◦ einen Indikator i_EVB, der die normalisierte mittlere quadratische Abweichung zwischen dem Parameter (m2), der eine gemessene momentane Position (VSV2) des zweiten Zylinders (22) repräsentiert, und dem Parameter (m7), der die Vorhersage einer Position des zweiten Zylinders repräsentiert, repräsentiert,
  ◦ einen Indikator i_CID, der in Abhängigkeit von einem Parameter (m15) bestimmt wird, der den mittleren Steuerstrom des Servoventils (25) repräsentiert, normalisiert durch einen Parameter (m14), der in Abhängigkeit von einem Referenz-Steuerstrom bestimmt wird, und
  ◦ einen Indikator i_CINT, der in Abhängigkeit von einem Parameter (m17) bestimmt wird, der den mittleren Gesamtstrom der Servoschleife (3) repräsentiert, normalisiert durch einen Parameter (m16), der einen Referenz-Gesamtstrom repräsentiert.

**Claims**

1.  A monitoring method for monitoring a servo-control loop (3) of an actuator system (2) for actuating variable-geometry components of a turbojet, the actuator system (2) comprising a servovalve (25) operating first and second actuators (21, 22), said method comprising:

    - an estimation step (E20) of estimating a plurality of monitoring parameters (m1-m17) from operating data (d4-d14) of the servo-control loop (3), said monitoring parameters being selected from at least one of the following categories:

        • a category of parameters representative of positions (VSV1, VSV2, VSVsel) of the actuators (21, 22);
        • a category of parameters representative of coefficients of autoregressive models used for predicting actuator positions as a function of a control current (iCMD) of the servovalve (25); and
        • a category of parameters representative of the control current (iCMD) of the servovalve (25) or an integral current of the servo-control loop (3);

    - an evaluation step (E30) of evaluating a plurality of indicators (i_EVS, i_EVA, i_EVB, i_CID, i_CINT, i_EPA, i_EPB, i_SOMA, i_SOMB, and i_EWRAP) from the monitoring parameters;
    - an determination step (E40) for determining at least one signature from the values of at least some of the indicators; and
    - a detection and location step (E50) of detecting and locating a degradation affecting the servo-control loop as a function of said at least one signature ;
    wherein :
    the category of parameters representative of a position of the actuators (21, 22) comprises at least one of the following parameters:

        • a parameter (m1) representative of a measured instantaneous position (VSV1) of the first actuator (21);
        • a parameter (m2) representative of a measured instantaneous position (VSV2) of the second actuator (22);
        • a parameter (m6) representative of a predicted position of the first actuator (21);
        • a parameter (m7) representative of a predicted position of the second actuator (22); and
        • a parameter (m5) representative of a predicted overall position of the actuator;

    - the plurality of indicators comprises:

        • an indicator i_EVS representing the normalized mean square difference between the parameter (m5) representative of the predicted overall position of the actuator and an instantaneous overall position (VSVsel) of the actuators (21, 22);
        • an indicator i_EVA representing the normalized mean square difference between the parameter (m1) representative of a measured instantaneous position (VSV1) of the first actuator (21) and the parameter (m6) representative of a predicted position of the first actuator;
        • an indicator i_EVB representing the normalized mean square difference between the parameter (m2) representative of a measured instantaneous position (VSV2) of the second actuator (22) and the parameter (m7) representative of a predicted position of the second actuator;
        • an indicator i_CID determined as a function of a parameter (m15) representative of the mean control current of the servovalve (25), as normalized by a parameter (m14) determined as a function of a reference control current; and
        • an indicator i_CINT determined as a function of a parameter (m17) representative of the mean integral current of the servo-control loop (3), normalized by a parameter (m16) representative of a reference integral current.

2.  A monitoring method according to claim 1, wherein at least one of said parameters (m4-m7) is estimated from an autoregressive model depending on at least one exogenous variable (d1-d3) selected from:

        • air pressure of a combustion chamber of the turbojet;
        • metered fuel flow rate through at least one injector of the combustion chamber of the turbojet; and
        • speed of rotation of a high-pressure shaft of the turbojet.

3.  A monitoring method according to claim 1 or 2, wherein the positions of the first and second actuators, respectively, are measured by position sensors comprising secondary windings, the rms voltages across the secondary windings depending on the position of the actuator, with the plurality of indicators comprising:

- an indicator i_EPA representative of a prediction error for the position of the first actuator (21);
- an indicator i_EPB representative of a prediction error for the position of the second actuator (22);
- an indicator i_SOMA determined as a function of a parameter (m9) representing a mean value of the sum of the rms voltages (V23_EA and V23_EB) of the secondary windings of the position sensors of the first actuator (21), normalized by a parameter (m8) representative of a reference mean position for the first actuator (21);
- an indicator i_SOMB determined as a function of a parameter (m11) representing a mean value of the sum of the rms voltages (V24_EA and V24_EB) of the secondary windings of the position sensors of the second actuator (22), normalized by a parameter (m10) representative of a reference mean position for the second actuator (22); and
- an indicator i_EWRAP representative of the mean difference (m12, m13) existing between the control current (iCMD) of the servovalve (25) and a return current as actually measured.

4. A monitoring method according to any of the claims 1 to 3, wherein the actuator system is a system for actuating variable-geometry components selected from:

- positions of a bleed valve for a turbojet compressor;
- a fuel flow rate; and
- clearances at the blade tips of a high-pressure or low-pressure turbine.

5. A computer program including instructions for executing steps of a monitoring method according to any of the claims 1 to 4, when said program is executed by a computer.

6. A device for monitoring a servo-control loop (3) of an actuator system (2) for actuating variable-geometry components of a turbojet, the actuator system (2) comprising a servovalve (25) operating first and second actuators (21, 22), said device comprising:

- estimator means for estimating a plurality of monitoring parameters (m1-m17) from operating data (d4-d14) of the servo-control loop (3), said monitoring parameters being selected from at least one of the following categories:

- a category of parameters representative of positions (VSV1, VSV2, VSVsel) of the actuators (21, 22);
- a category of parameters representative of coefficients of autoregressive models used for predicting actuator positions as a function of a control current (iCMD) of the servovalve (25); and
- a category of parameters representative of the control current (iCMD) of the servovalve (25) or an integral current of the servo-control loop (3);

- evaluation means for evaluating a plurality of indicators (i_EVS, i_EVA, i_EVB, i_CID, i_CINT, i_EPA, i_EPB, i_SOMA, i_SOMB, and i_EWRAP) from the monitoring parameters;
- determination means for determining at least one signature from values of at least some of the indicators; and
- detection and location means for detecting and locating a degradation affecting the servo-control loop as a function of said at least one signature;
wherein :
the category of parameters representative of a position of the actuators (21, 22) comprises at least one of the following parameters:

- a parameter (m1) representative of a measured instantaneous position (VSV1) of the first actuator (21);
- a parameter (m2) representative of a measured instantaneous position (VSV2) of the second actuator (22);
- a parameter (m6) representative of a predicted position of the first actuator (21);
- a parameter (m7) representative of a predicted position of the second actuator (22); and
- a parameter (m5) representative of a predicted overall position of the actuator;

- the plurality of indicators comprises:

- an indicator i_EVS representing the normalized mean square difference between the parameter (m5) representative of the predicted overall position of the actuator and an instantaneous overall position (VSVsel) of the actuators (21, 22);

• an indicator i_EVA representing the normalized mean square difference between the parameter (m1) representative of a measured instantaneous position (VSV1) of the first actuator (21) and the parameter (m6) representative of a predicted position of the first actuator;

• an indicator i_EVB representing the normalized mean square difference between the parameter (m2) representative of a measured instantaneous position (VSV2) of the second actuator (22) and the parameter (m7) representative of a predicted position of the second actuator;

• an indicator i_CID determined as a function of a parameter (m15) representative of the mean control current of the servovalve (25), as normalized by a parameter (m14) determined as a function of a reference control current; and

• an indicator i_CINT determined as a function of a parameter (m17) representative of the mean integral current of the servo-control loop (3), normalized by a parameter (m16) representative of a reference integral current.

FIG.1

EP 2 630 548 B1

FIG.2

E10 — Réception des données de fonctionnement et des variables exogènes d1 à d14

E20 — Estimation des paramètres de surveillance m1 à m17 à partir de d1 à d14

E30 — Evaluation d'une série d'indicateurs i_EVS, i_EVA, i_EVB, i_CID, i_CINT, i_EPA, i_EPB, i_SOMA, i_SOMB, i_EWRAP à partir de m1 à m17 sur différentes plages temporelles

E40 — Evaluation de symptômes associés aux indicateurs

FIG.3

E50 — Détection et localisation d'une dégradation à partir des symptômes

E60 — Dégradation détectée ?

NON

OUI

E70 — Délivrance d'un avis de maintenance

E80 — Pas de délivrance d'un avis de maintenance

```
┌─────────────────────────────────────────────────────┐
│        ┌──────────────────────────────────────┐      │
│        │           Nouvelle mission           │◄─┐   │
│        └──────────────────────────────────────┘  │   │
│                        │                          │   │
│  F10   ┌──────────────────────────────────────┐  │   │
│        │  Réception des données de fonctionnement│ │   │
│        └──────────────────────────────────────┘  │   │
│                        │                          │   │
│  F20   ┌──────────────────────────────────────┐  │   │
│        │  Estimation des paramètres de surveillance│ │ │
│        └──────────────────────────────────────┘  │   │
│                        │                          │   │
│  F30   ┌──────────────────────────────────────┐  │   │
│        │       Obtention des indicateurs       │──┘   │
│        └──────────────────────────────────────┘      │
└─────────────────────────────────────────────────────┘
                         │
          ┌──────────────────────────────────────┐
  F40     │      Détermination de signatures      │
          │        associées aux indicateurs      │
          └──────────────────────────────────────┘
                         │
          ┌──────────────────────────────────────┐
  F50     │          Comparaison avec des         │
          │        signatures de références       │
          └──────────────────────────────────────┘
                         │
                       ╱   ╲
  F60                 ╱ Dégra- ╲        NON
                     ╱ dation   ╲──────────────┐
                     ╲ détectée ?╱             │
                      ╲         ╱              │
                       ╲   ╱                   │
                        │ OUI                  │
          ┌─────────────────────┐   ┌─────────────────────┐
  F70     │  Délivrance d'un avis│   │ Pas de délivrance d'un│ F80
          │     de maintenance   │   │   avis de maintenance │
          └─────────────────────┘   └─────────────────────┘
```

FIG.4

FIG.5

FIG.6A

FIG.6B

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2939924
- FR 1058681

- FR 2939170 A1
- US 2008243291 A1

**Littérature non-brevet citée dans la description**

- **DÈ E. DIEZ-LLEDÓ ; J. AGUILAR-MARTIN ; J-R. MASSÉ ; A. SIF ; E. GRIFUL.** Hydraulic Actuation Loop Degradation Diagnosis and Prognosis. *1st CE-AS European Air and Space Conference,* 2007